# EUROPÄISCHE PATENTSCHRIFT

(11) **EP 0 654 476 B1**
(45) Veröffentlichungstag und Bekanntmachung des Hinweises auf die Patenterteilung: **24.01.2001**
(21) Anmeldenummer: 94118188.5
(22) Anmeldetag: 18.11.1994
(51) Int. Cl.: C07F 17/00, C08F 10/00, C08F 4/642

(54) **Metallocene, Verfahren zu ihrer Herstellung und ihrer Verwendung als Katalysatoren**
Metallocenes, their preparation and use as catalysts
Metallocènes, leur procédé de préparation et utilisation comme catalyseurs

(30) Priorität: 24.11.1993 DE 4340018; 27.12.1993 DE 4344708; 27.12.1993 DE 4344687
(43) Veröffentlichungstag der Anmeldung: 24.05.1995
(73) Patentinhaber: TARGOR GmbH, 55116 Mainz (DE)
(72) Erfinder: Küber, Frank, Dr., D-61440 Oberursel (DE); Aulbach, Michael, Dr., D-65719 Hofheim (DE); Bachmann, Bernd, Dr., D-65817 Eppstein (DE); Spaleck, Walter, Dr., D-65835 Liederbach (DE); Winter, Andreas, Dr., D-61479 Glashütten (DE)

(56) Entgegenhaltungen:
- EP-A- 0 528 041
- CHEMICAL ABSTRACTS, vol. 117, no. 17, 26. Oktober 1992, Columbus, Ohio, US; abstract no. 171698x, INOUE, N. ET AL. 'PREPARATION OF TRANSITION METAL COMPOUNDS AS CATALYSTS FOR POLYMERIZATION OF .ALPHA.-OLEFINS' Seite 870 ; & JP-A-0 491 095 (MITSUI TOATSU KAGAKU K.K.)
- CHEMICAL ABSTRACTS, vol. 117, no. 12, 21. September 1992, Columbus, Ohio, US; abstract no. 112257e, INOUE, N. ET AL. 'PREPARATION OF SYNDIOTACTIC POLYOLEFINS' Seite 12 ; & JP-A-0 485 310 (MITSUI TOATSU KAGAKU K.K.)
- CHEMICAL ABSTRACTS, vol. 117, no. 10, 7. September 1992, Columbus, Ohio, US; abstract no. 91047u, INOUE, N. ET AL. 'SYNDIOTACTIC POLYPROPYLENE PREPARED WITH METALLOCENE CATALYSTS' Seite 17 ; & JP-A-0 480 214 (MITSUI TOATSU KAGAKU K.K.)

## Beschreibung

Die vorliegende Erfindung bezieht sich auf neue Metallocene, die mehr als ein Zentralatom enthalten und vorteilhaft als Katalysatorkomponenten bei der Herstellung von Polyolefinen, insbesondere solchen mit hoher Stereoregularität, hoher Molmasse und guter Kornmorphologie, verwendet werden können.

Aus der Literatur ist die Herstellung von Polyolefinen mit löslichen Metallocenverbindungen in Kombination mit Aluminoxanen oder anderen Cokatalysatoren, die aufgrund ihrer Lewis-Acidität das neutrale Metallocen in ein Kation überführen und stabilisieren können, bekannt.

Lösliche Metallocenverbindungen auf der Basis von Bis(cyclopentadienyl)zirkondialkyl bzw. dihalogenid in Kombination mit oligomeren Aluminoxanen können Ethylen mit guter und Propylen mit mäßiger Aktivität polymerisieren. Man erhält Polyethylen mit enger Molmassenverteilung und mittlerer Molmasse. Das auf diese Weise hergestellte Polypropylen ist ataktisch und hat eine sehr niedrige Molmasse.

Die Herstellung von isotaktischem Polypropylen gelingt mit Hilfe des Ethylenbis(4,5,6,7-tetrahydro-1-indenyl)zirkoniumdichlorids zusammen mit einem Aluminoxan in einer Suspensionspolymerisation (EP 185 918). Das Polymer besitzt eine enge Molmassenverteilung. Der Nachteil dieses Verfahrens ist, daß bei technisch relevanten Polymerisationstemperaturen nur Polymere mit sehr niedriger Molmasse hergestellt werden können.

Es wurde auch eine spezielle Voraktivierungsmethode des Metallocens mit einem Aluminoxan beschrieben, welche zu einer beachtlichen Steigerung der Aktivität des Katalysatorsystems und zu einer deutlichen Verbesserung der Kornmorphologie des Polymeren führt (EP 302 424). Die Voraktivierung erhöht die Molmasse jedoch nicht wesentlich.

Weiterhin sind Katalysatoren auf der Basis von Ethylenbisindenylhafniumdichlorid und Ethylenbis(4,5,6,7-tetrahydro-1-indenyl)hafniumdichlorid und Methylaluminoxan bekannt, mit denen durch Suspensionspolymerisation höhermolekulare Polypropylene hergestellt werden können (J. Am. Chem. Soc. (1987), 109, 6544). Unter technisch relevanten Polymerisationsbedingungen ist jedoch die Kornmorphologie der derart erzeugten Polymere nicht befriedigend und die Aktivität der eingesetzten Katalysatorsysteme vergleichsweise gering. Außerdem weisen diese Systeme hohe Katalysatorkosten auf, so daß mit diesen Systemen eine kostengünstige Polymerisation nicht möglich ist.

Eine deutliche Steigerung der Molmasse konnte durch die Verwendung von Metallocenen erreicht werden, bei denen die durch eine Brücke fixierten Indenyl-Liganden in 2-Stellung (EP 485 822) oder in 2- und 4-Stellung (EP 530 647) Substituenten tragen.

Eine weitere Steigerung der Molmasse wurde durch die Verwendung von Indenyl-Liganden mit Substituenten in 2-, 4- und 6-Stellung (EP 545 303) sowie aromatischer π-Liganden vom 4,5-Benzoindenyltyp erreicht (EP 549 900).

Ein Nachteil im Fall der stereospezifischen Polymerisation prochiraler Monomere, z. B. von Propylen, mit Metallocenkatalysatoren ist die relativ niedrige Isotaxie, die sich im Falle von isotaktischem Polypropylen in niedrigen Schmelzpunkten auswirkt. Insbesondere Metallocene mit Substituenten in 2- und 4-Stellung und speziell rac-Dimethylsilylbis(2-Methyl-4-isopropyl-indenyl)zirkoniumdichlorid in Kombination mit Methylaluminoxan liefern im Fall von Propylen ein Polymer mit hoher Isotaktizität und daher hohem Schmelzpunkt (EP 530 647). Eine weitere Steigerung der Schmelzpunkte wurde durch die Verwendung von 4-Aryl substituierten Bisindenylsystemen erreicht (EP 576 970).

Es gibt allerdings auch technische Anwendungen, bei denen niedrige Schmelzpunkte erwünscht sind.

Ein Nachteil bei der Verwendung löslicher (homogener) Metallocen-Methylaluminoxan-Katalysatorsysteme in Verfahren, bei denen das gebildete Polymer als Feststoff anfällt, ist die Ausbildung von starken Belägen an Reaktorwänden und Rührer. Diese Beläge entstehen durch Agglomeration der Polymerpartikel, wenn das Metallocen, oder Aluminoxan, oder beide gelöst im Suspensionsmedium vorliegen. Derartige Beläge in den Reaktorsystemen müssen regelmäßig entfernt werden, da diese rasch erhebliche Stärken erreichen, eine hohe Festigkeit besitzen und den Wärmeaustausch zum Kühlmedium verhindern.

Zur Vermeidung von Reaktorbelägen können Metallocene geträgert werden. Verfahren dazu sind bekannt (EP 578 838). Aus technischen Gründen wäre es vorteilhaft auf den zusätzlichen Verfahrensschritt der Trägerung zu verzichten. Aus EP 528 041 sind zweikernige Metallocene bekannt, die sich zur Herstellung syndiotaktischer Polymere mit niedrigem Molekulargewicht eignen.

Es bestand die Aufgabe, ein Katalysatorsystem zu finden, das die Nachteile des Standes der Technik vermeidet und insbesondere Polymere mit sehr hoher Molmasse und im Fall der stereospezifischen Polymerisation prochiraler Monomere, Polymere mit hoher Stereoregularität in großer Ausbeute liefert.

Es wurde nun gefunden, daß Metallocene, die mehr als ein Zentralatom enthalten und eine spezielle Verbrückung aufweisen, geeignete Katalysatoren sind, welche die aus dem Stand der Technik bekannten Nachteile, vermeiden.

Überraschenderweise wurde weiter gefunden, daß sich die erfindungsgemäßen Metallocene bevorzugt zur Herstellung isotaktischer Polyolefine mit nur geringem extrahierbaren Anteil eignen.

Die vorliegende Erfindung betrifft somit eine mehrkernige Metallocen-Verbindung der Formel I 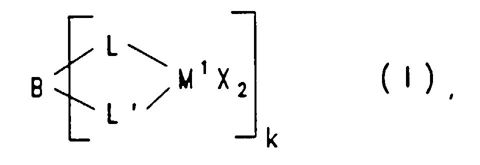 worin
M¹ gleich oder verschieden sind und ein Metall der Gruppe IVb, Vb oder Vlb des Periodensystems sind,
X gleich oder verschieden sind und Wasserstoff, eine C₁-C₁₀-Alkyl-, eine C₁-C₁₀-Alkoxy-, eine C₆-C₁₀-Aryl-, eine C₆-C₁₀-Aryloxy-, eine C₂-C₁₀-Alkenyl-, eine C₇-C₄₀-Arylalkyl-, eine C₇-C₄₀-Alkylaryl-, eine C₈-C₄₀-Arylalkenyl-, eine OH-Gruppe, ein Halogenatom oder Pseudohalogen bedeuten,
L und L' gleich oder verschieden sind und einen π-Liganden oder O, S, PR⁴ oder NR⁴, worin R⁴ für ein Wasserstoffatom oder einen C₁-C₃₀-Kohlenwasserstoffrest wie C₁-C₂₀-Alkyl oder C₆-C₁₄ Aryl steht, bedeuten,
k gleich 2 ist, wenn B 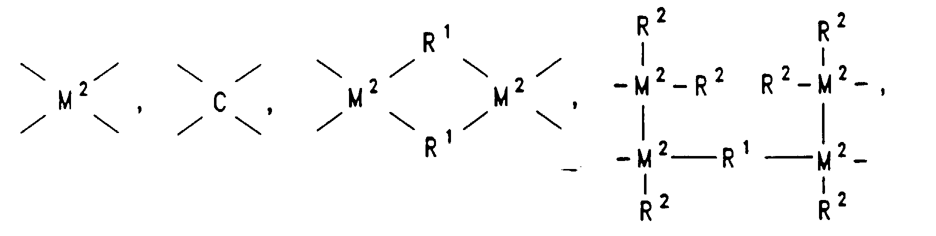 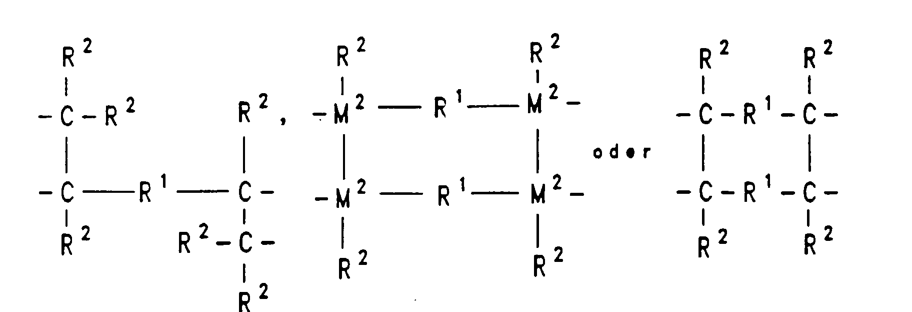
ist, und k eine ganze Zahl > 2 ist, wenn B 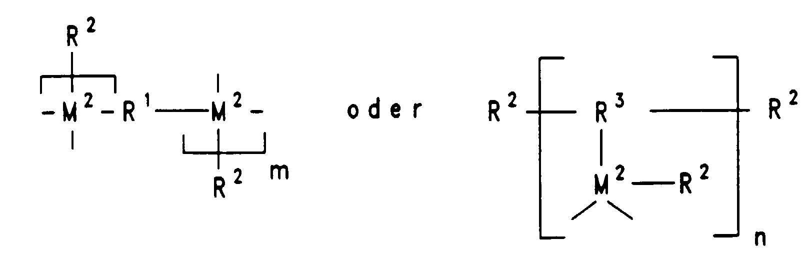 ist, wobei R¹ gleich oder verschieden sind und eine zweibindige kohlenwasserstoffhaltige Verbrückung bedeuten,
die Reste R² gleich oder verschieden sind und ein Wasserstoffatom, ein Halogenatom oder einen kohlenwasserstoffhaltigen Rest bedeuten,
R³ ein dreibindiger kohlenwasserstoffhaltiger Rest ist, und n gleich k und m gleich k-1 ist und
M² Silizium, Germanium oder Zinn ist.

Der Deutlichkeit halber sei darauf verwiesen, daß jede "freie" Valenz der Strukturelemente B an einen Liganden L oder L' knüpft.

M¹ sind gleich oder verschieden und ein Metall der Gruppe IVb, Vb oder VIb des Periodensystems, beispielsweise Titan, Zirkonium, Hafnium, Vanadium, Niob, Tantal, Chrom, Molybdän oder Wolfram, vorzugsweise Zirkonium, Hafnium und Titan.

Die Reste X sind gleich oder verschieden und bedeuten ein Wasserstoffatom, eine C₁-C₁₀-, vorzugsweise C₁-C₄-Alkylgruppe, eine C₁-C₁₀-, vorzugsweise C₁-C₃-Alkoxygruppe, eine C₆-C₁₀-, vorzugsweise C₆-C₈-Arylgruppe, eine C₆-C₁₀-, vorzugsweise C₆-C₈-Aryloxygruppe, eine C₂-C₁₀-, vorzugsweise C₂-C₄-Alkenylgruppe, eine C₇-C₄₀-, vorzugsweise C₇-C₁₀-Arylalkylgruppe, eine C₇-C₄₀-, vorzugsweise C₇-C₁₂-Alkylarylgruppe, eine C₈-C₄₀-, vorzugsweise C₈-C₁₂-Arylalkenylgruppe, ein Halogenatom, vorzugsweise Chlor oder ein Pseudohalogen wie Nitril.

L und L' sind gleich oder verschieden und sind bevorzugt eine substituierte oder unsubstituierte Cyclopentadienylgruppe, O, S, PR⁴ oder NR⁴, worin R⁴ für ein Wasserstoffatom oder einen C₁-C₃₀-Kohlenwasserstoffrest wie C₁-C₂₀-Alkyl oder C₆-C₁₄Aryl steht.

Beispiele für L und L' sind:
Tert.-butylamido, Cyclohexylamido, Phenylamido, 2,6-Diisopropylphenylamido, 2,6-Ditert.-butylphenylamido, Cyclododecylamido, Cyclopentadienyl, Tetramethylcyclopentadienyl, Methylcyclopentadienyl, Methyl-tert.-butylcyclopentadienyl, Tert.-butylcyclopentadienyl, Isopropylcyclopentadienyl, Dimethylcyclopentadienyl, Trimethylcyclopentadienyl, Trimethylethylcyclopentadienyl, Phenylcyclopentadienyl, Diphenylcyclopentadienyl, Indenyl, 2-Methylindenyl, 2-Ethylindenyl, 3-Methylindenyl, 3-tert.-Butylindenyl, 3-Trimetyhlsilylindenyl, 2-Methyl-4-phenylindenyl, 2-Ethyl-4-phenylindenyl, 2-Methyl-4-naphthyl-indenyl, 2-Methyl-4-isopropyl-indenyl, 4,5-Benzoindenyl, 2-Methyl-4,5-benzoindenyl, 2-Methyl-α-acenaphthindenyl, 2-Methyl-4,6-diisopropylindenyl, Fluorenyl, 4-Methylfluorenyl oder 2,7-Di-tert.-butylfluorenyl.

B ist 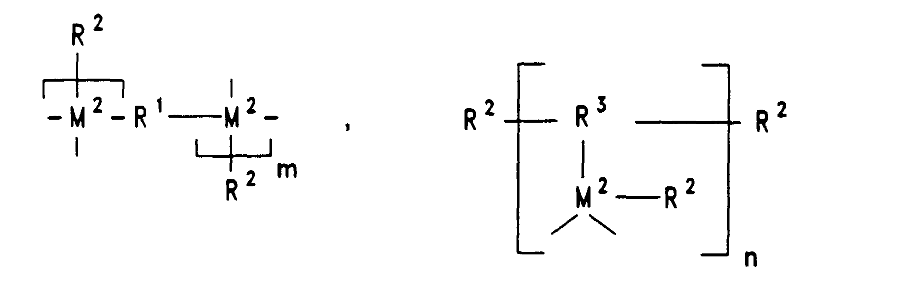 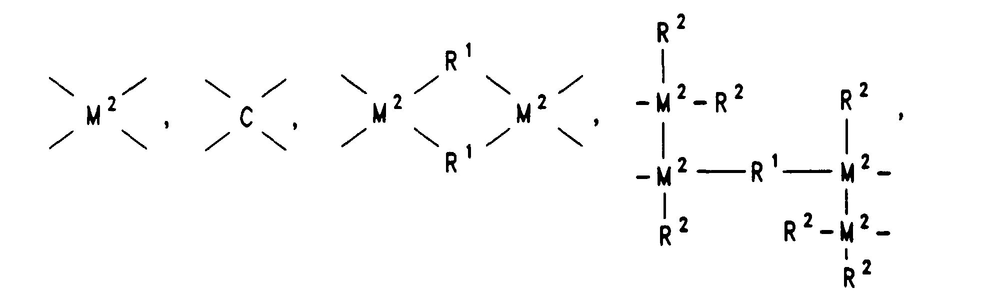 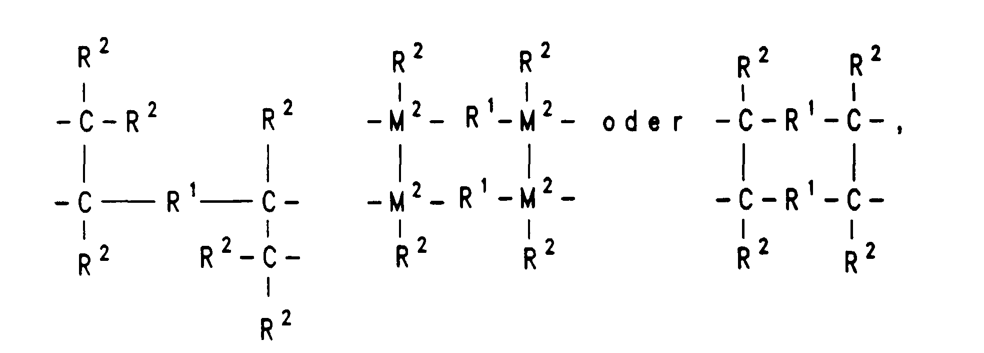 wobei R¹ gleich oder verschieden sind und eine zweibindige kohlenwasserstoffhaltige C₁-C₄₀-Verbrückung, bevorzugt eine zweibindige C₁-C₄₀-Alkyl-, C₁-C₁₀-Fluoralkyl, C₆-C₁₀-Aryl-, C₆-C₁₀-Fluoraryl-, C₇-C₂₀-Alkylaryl-, C₇-C₂₀-Arylalkyl-, C₁-C₁₀-Alkoxy-, C₆-C₁₀-Aryloxy-, C₂-C₁₀-Alkenyl-oder C₈-C₂₀-Arylalkenylgruppe bedeuten, die Reste R² gleich oder verschieden sind und ein Wasserstoffatom, ein Halogenatom, oder einen kohlenwasserstoffhaltigen C₁-C₄₀-Rest wie eine C₁-C₁₀-Alkyl-, eine C₁-C₁₀-Fluoralkyl-, eine C₁-C₁₀-Alkoxy-, eine C₆-C₁₀-Aryl-, eine C₆-C₁₀-Fluoraryl-, eine C₆-C₁₀-Aryloxy-, eine C₂-C₁₀-Alkenyl-, eine C₇-C₂₀-Alkylaryl-, eine C₇-C₄₀-Alkylaryl- oder eine C₈-C₄₀-Arylalkenylgruppe bedeuten und R³ ein dreibindiger kohlenwasserstoffhaltiger C₁-C₄₀-Rest, bevorzugt ein C₁-C₄₀-Kohlenwasserstoffrest, besonders bevorzugt eine dreibindige C₇-C₄₀-Alkyl-, C₁-C₄₀-Alkylaryl-, C₆-C₄₀-Arylalkyl-, C₂-C₄₀-Alkenyl- oder C₈-C₄₀-Arylalkenylgruppe ist, n gleich k und m gleich k-1 ist und M² Silizium, Germanium oder Zinn ist.

Wenn B 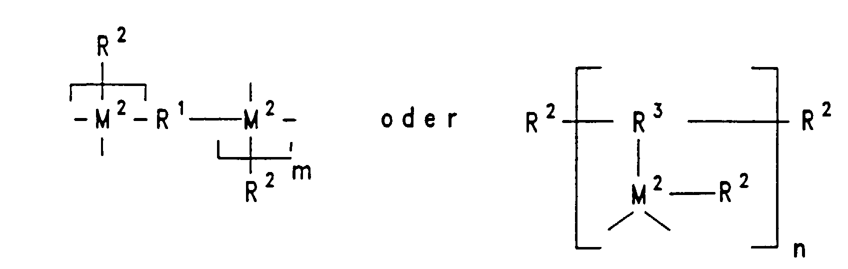 ist, ist k bevorzugt eine ganze Zahl von 2 bis 100000, besonders bevorzugt 2 bis 20, insbesondere 2.
Vorzugsweise ist B 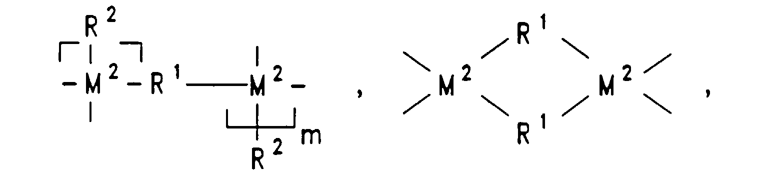 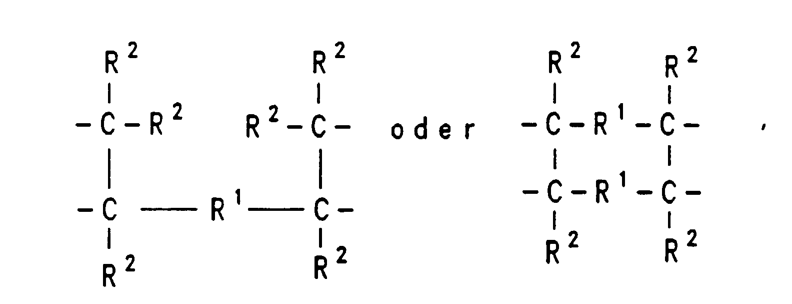 wobei die Reste R¹ gleich oder verschieden sind und eine zweibindige C₁-C₁₀-, vorzugsweise C₁-C₆-Alkylgruppe sind, die linear oder verzweigt sein können, insbesondere 1,2-Ethandiyl, 1,3-Propandiyl, 1,4-Butandiyl, 1,6-Hexandiyl, eine C₆-C₁₀-, vorzugsweise C₆-Arylgruppe, insbesondere 1,4-Phenylen, eine C₆-C₁₀-Fluoraryl-, vorzugsweise C₆-Fluorarylgruppe, eine C₇-C₂₀-Alkylaryl-, vorzugsweise C₇-C₁₂-Alkylarylgruppe, insbesondere p-Xylylen, m-Xylylen, o-Xylylen, eine C₇-C₂₀-Arylalkyl vorzugsweise C₇-C₁₂-Arylalkylgruppe, eine C₁-C₁₀-Alkoxy-, vorzugsweise C₁-C₆-Alkoxygruppe, eine C₂-C₁₀-Alkenyl-, vorzugsweise C₂-C₆-Alkenylgruppe, eine C₈-C₂₀-Arylalkenyl-, vorzugsweise C₈-C₁₄-Arylalkenylgruppen bedeuten,
die Reste R² gleich oder verschieden sind und ein Wasserstoffatom, ein Halogenatom, eine C₁-C₁₀-, vorzugsweise C₁-C₄-Alkylgruppe insbesondere Methylgruppe, eine C₁-C₁₀-Fluoralkyl, vorzugsweise CF₃-Gruppe, eine C₆-C₂₀-, vorzugsweise C₆-C₁₀-Aryl, eine C₆-C₁₀-Fluoraryl-, vorzugsweise Pentafluorphenylgruppe, eine C₁-C₁₀-, vorzugsweise C₁-C₄-Alkoxygruppe, insbesondere Methoxygruppe, eine C₂-C₁₀-, vorzugsweise C₂-C₄-Alkenylgruppe, eine C₇-C₄₀-, vorzugsweise C₇-C₁₀-Arylalkylgruppe, eine C₈-C₄₀-, vorzugsweise C₈-C₁₂-Arylalkenylgruppe, eine C₇-C₄₀-, vorzugsweise C₇-C₁₂-Alkylarylgruppe bedeuten und m gleich k-1 ist, und
M² Silizium, Germanium oder Zinn, vorzugsweise Silizium oder Germanium, insbesondere Silizium ist.

Bevorzugt sind Verbindungen der Formel II 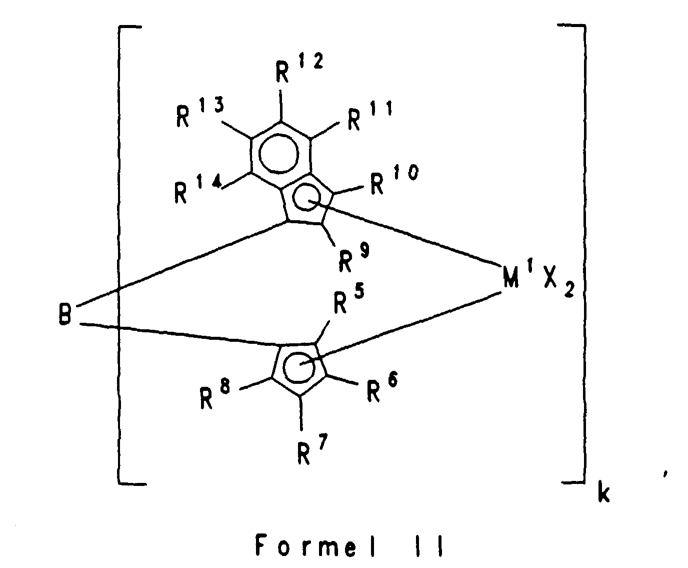 worin
M¹ gleich oder verschieden sind und ein Metall der Gruppe IVb, Vb oder VIb des Periodensystems sind,
X gleich oder verschieden sind und Wasserstoff, eine C₁-C₁₀-Alkyl-, eine C₁-C₁₀-Alkoxy-, eine C₆-C₁₀-Aryl-, eine C₆-C₁₀-Aryloxy-, eine C₂-C₁₀-Alkenyl-, eine C₇-C₄₀-Arylalkyl-, eine C₇-C₄₀-Alkylaryl-, eine C₈-C₄₀-Arylalkenyl-, eine OH-Gruppe, ein Halogenatom oder Pseudohalogen bedeuten,
die Reste R⁵, R⁶, R⁷ und R⁸ gleich oder verschieden sind und ein Wasserstoffatom, ein Halogenatom, eine C₁-C₁₀-Alkylgruppe, die halogeniert sein kann, eine C₆-C₂₀-Aryl-, C₇-C₄₀-Arylalkyl-, eine C₇-C₄₀-Alkylaryl-, eine C₂-C₁₀-Alkenyl-, C₈-C₄₀-Arylalkenylgruppe, einen -NR¹⁵₂-, -SR¹⁵-, -OSiR¹⁵₃-, -SiR¹⁵₃- oder -PR¹⁵₂-Rest bedeuten, worin R¹⁵ gleich oder verschieden ist und eine C₁-C₁₀-Alkylgruppe oder eine C₆-C₁₀-Arylgruppe ist, oder zwei oder mehr benachbarte Reste R⁵, R⁶, R⁷ und R⁸ zusammen mit den sie verbindenden Atomen ein Ringsystem bilden,
R⁹ bis R¹⁴ gleich oder verschieden sind und ein Wasserstoffatom, ein Halogenatom, eine C₁-C₁₀-Alkylgruppe, die halogeniert sein kann, eine C₆-C₂₀-Aryl-, C₇-C₄₀-Arylalkyl-, eine C₇-C₄₀-Alkylaryl-, eine C₂-C₁₀-Alkenyl-, C₈-C₄₀-Arylalkenylgruppe, einen -NR¹⁵₂-, -SR¹⁵-, -OSiR¹⁵₃-, -SiR¹⁵₃- oder -PR¹⁵₂-Rest bedeuten, worin R¹⁵ gleich oder verschieden ist und eine C₁-C₁₀-Alkylgruppe oder eine C₆-C₁₀-Arylgruppe ist, oder zwei oder mehr benachbarte Reste R⁹, R¹⁰, R¹¹, R¹², R¹³ und R¹⁴ zusammen mit den sie verbindenden Atomen ein Ringsystem bilden,
k gleich 2 ist, wenn B 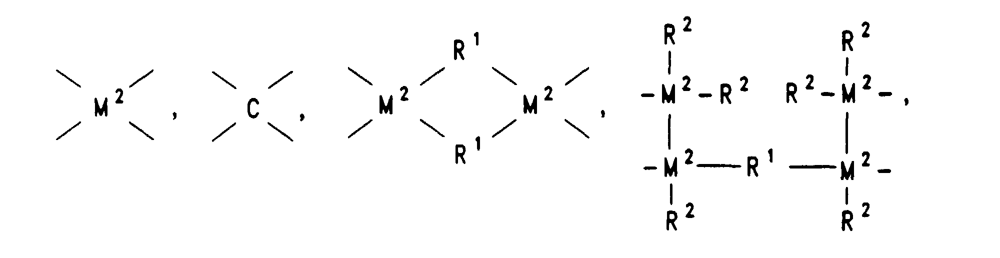 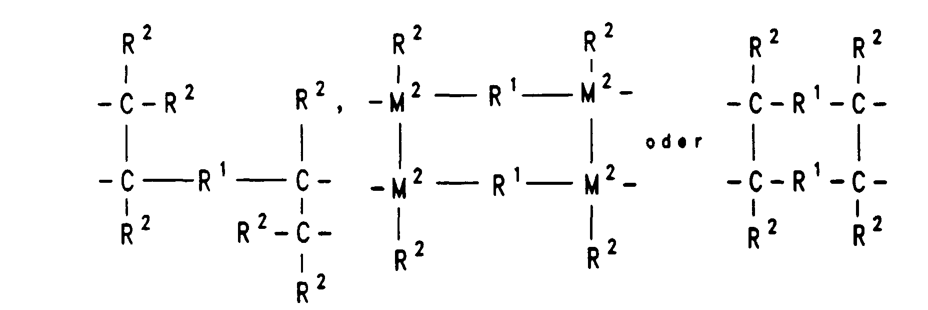
ist, und k eine ganze Zahl ≥ 2 ist, wenn B 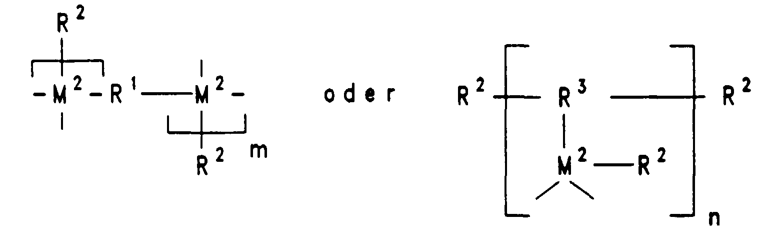 ist, wobei
R¹ gleich oder verschieden sind und eine zweibindige kohlenwasserstoffhaltige C₁-C₄₀-Verbrückung bedeuten,
die Reste R² gleich oder verschieden sind und ein Wasserstoffatom, ein Halogenatom oder einen kohlenwasserstoffhaltigen C₁-C₄₀-Rest bedeuten,
R³ ein dreibindiger kohlenwasserstoffhaltiger C₁-C₄₀-Rest ist, und n gleich k und m gleich k-1 ist und
M² Silizium, Germanium oder Zinn ist.

Für Verbindungen der Formel II gilt besonders bevorzugt, daß
M¹ gleich oder verschieden Zirkonium oder Hafnium sind,
die Reste X gleich sind und eine C₁-C₄-Alkylgruppe, eine C₇-C₁₀-Alkylarylgruppe oder ein Halogenatom bedeuten,
R⁵ bis R⁸ gleich oder verschieden sind und ein Wasserstoffatom, eine C₁-C₁₀-Alkylgruppe, eine C₆-C₂₀-Arylgruppe oder einen SiR¹⁵₃-Rest, worin R¹⁵ eine C₁-C₁₀-Alkylgruppe ist, bedeuten, oder die Reste R⁵ und R⁶ und/oder R⁷ und R⁸ zusammen mit den sie verbindenden Atomen ein aromatisches oder aliphatisches Ringsystem bilden,
R⁹ bis R¹⁴ gleich oder verschieden sind und ein Wasserstoffatom, eine C₁-C₁₀-Alkylgruppe oder eine C₆-C₂₀-Arylgruppe bedeuten, oder
R⁹ und R¹⁰ und/oder zwei oder mehr benachbarte Reste R¹¹, R¹², R¹³ und R¹⁴ zusammen mit den sie verbindenden Atomen, ein aromatisches oder aliphatisches Ringsystem bilden,
k gleich 2 ist,
B 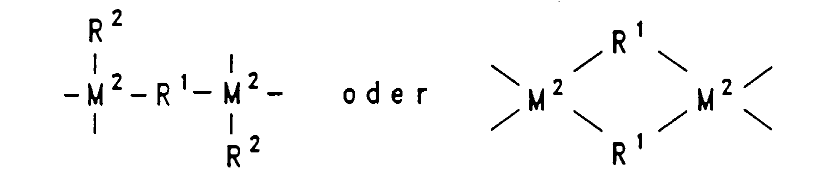 ist, wobei M² Silizium ist,
R¹ gleich oder verschieden sind und eine zweibindige lineare oder verzweigte C₁-C₆-Alkylgruppe, insbesondere 1,2-Ethandiyl, 1,3-Propandiyl, 1,4-Butandiyl oder 1,6-Hexandiyl bedeuten und
die Reste R² gleich oder verschieden sind und Wasserstoff, eine C₁-C₄-Alkylgruppe oder eine C₆-C₁₀-Arylgruppe bedeuten.

Zur Herstellung von isotaktischen Polyolefinen werden bevorzugt Verbindungen der Formel II eingesetzt, die zwei Indenylgruppen als Liganden aufweisen. Besonders bevorzugt sind hierzu solche Verbindungen der Formel II bei denen die Indenylgruppen in 2-, 2,4-, 2,6-, 2,4,6-, 2,4,5-, 2,4,5,6- und 2,5,6-Stellung substituiert sind, wobei die 2-Position bevorzugt durch einen C₁-C₁₀-Alkylrest substituiert ist und die 4-, 5- bzw. 6-Position durch C₁-C₁₀-Alkylreste, C₆-C₁₀-Arylreste oder durch eine Anellierung in 4,5- oder 4,5,6-Stellung substituiert sind. Der Begriff Ringsystem umfaßt also substituierte und unsubstituierte Ringsysteme.

Für den Substitionsort gilt folgende Nomenklatur: 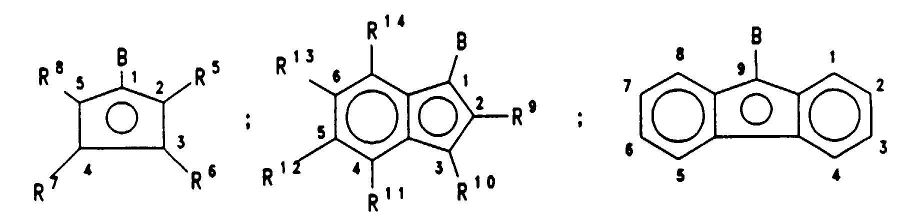 Bevorzugte Liganden sind:
1-indenyl, 2-alkyl-4-aryl-1-indenyl, 2,4-dialkyl-1-indenyl, 2,4-diaryl-1-indenyl, 2,4,6-trialkyl-1-indenyl, 1-alkyl-α-acenaphth-1-indenyl, 1-alkyl-4,5-benzo-1-indenyl, 2,5-dialkyl-1-indenyl, 2,5,6-trialkyl-1-indenyl, 2,4,5-trialkyl-1-indenyl, 2-alkyl-1-indenyl, 2-aryl-1-indenyl, 2,6-dialkyl-4-aryl-1-indenyl, 2-alkyl-5-aryl-1-indenyl, 2-alkyl-5,6-diaryl-1-indenyl, 2-alkyl-4,5-diaryl-1-indenyl, 2-alkyl-4,6-diaryl-1-indenyl, fluorenyl, 2,7-dialkyl-fluorenyl, oder 4-alkylfluorenyl, 2-alkyl-1-cyclopentadienyl, 2,4-dialkyl-1-cyclopentadienyl, 2,4,5-trialkyl-1-cyclopentadienyl, 2-Si(trialkyl)-1-cyclopentadienyl, 2-Si(trialkyl)-4-alkyl-1-cyclopentadienyl, 2-Si(trialkyl)-4,5-dialkyl-1-cyclopentadienyl, 2-alkyl-4-aryl-1-cyclopentadienyl, 2,5-alkyl-4-aryl-1-cyclopentadienyl, 2,4-alkyl-5-aryl-1-cyclopentadienyl, 2-aryl-1-cyclopentadienyl, 2-aryl-4-alkyl-1-cyclopentadienyl, 2-aryl-4,5-alkyl-1-cyclopentadienyl oder 2-alkyl-4,5-aryl-1-cyclopentadienyl.

Die folgenden Beispiele sollen die in der allgemeinen Formel I beschriebenen Verbindungen näher erläutern. Sie erheben aber keinen Anspruch auf Vollständigkeit:
1,6-{Bis[methylsilyl-(fluorenyl)(cyclopentadienyl)zirkoniumdichlorid]}hexan,
1,6-{Bis[methylsilyl-(indenyl)(cyclopentadienyl)zirkoniumdichlorid]}hexan,
1,6-{Bis[methylsilyl-(fluorenyl)(3-methyl-cyclopentadienyl)zirkoniumdichlorid]}hexan,
1,6-{Bis[methylsilyl-(indenyl)(3-methyl-cyclopentadienyl)zirkoniumdichlorid]}hexan,
1,6-{Bis[methylsilyl-(fluorenyl)(3-isopropyl-cyclopentadienyl)zirkoniumdichlorid]}hexan,
1,6-{Bis(methylsilyl-(indenyl)(3-isopropyl-cyclopentadienyl)zirkoniumdichlorid]}hexan,
1,6-{Bis[methylsilyl-(2,7-di-tert.-butyl-fluorenyl)(cyclopentadienyl)zirkoniumdichlorid]}-hexan,
1,6-{Bis[methylsilyl-(2-methyl-indenyl)(cyclopentadienyl)zirkoniumdichlorid]}hexan,
1,6-{Bis[methylsilyl-(2-methyl-4-phenyl-indenyl)(cyclopentadienyl)zirkoniumdichlorid]}-hexan,
1,6-{Bis[methylsilyl-(4-phenyl-indenyl)(cyclopentadienyl)zirkoniumdichlorid]}hexan,
1,6-{Bis[methylsilyl-(2-methyl-4-phenylindenyl)(2,3,5-trimethyl-cyclopentadienyl)-zirkoniumdichlorid]}hexan,
1,6-{Bis[methylsilyl-(fluorenyl)(3-phenyl-cyclopentadienyl)zirkoniumdichlorid]}hexan,
1,6-{Bis[methylsilyl-(indenyl)(3-phenyl-cyclopentadienyl)zirkoniumdichlorid]}hexan,
1,6-{Bis[methylsilyl-(2-methyl-4,5-benzo-indenyl)(cyclopentadienyl)zirkoniumdichlorid]}-hexan,
1,6-{Bis[methylsilyl-(2-methyl-4,6-diisopropyl-indenyl)(cyclopentadienyl)-zirkoniumdichlorid]}hexan,
1,6-{Bis[methylsilyl-(2-methyl-4-(1-naphthyl-indenyl)(cyclopentadienyl)-zirkoniumdichlorid]}hexan,
1,6-{Bis[methylsilyl-(2-ethyl-4-phenyl-indenyl)(cyclopentadienyl)zirkoniumdichlorid]}-hexan,
1,6-{Bis[methylsilyl-(2-methyl-4,5-benzo-indenyl)(2,3,5-trimethyl-cyclopentadienyl)-zirkoniumdichlorid]}hexan,
1,6-{Bis[methylsilyl-(2-methyl-4,6-diisopropyl-indenyl)(2,3,5-trimethylcyclopentadienyl)-zirkoniumdichlorid]}hexan,
1,6-{Bis[methylsilyl-(2-methyl-4-(1-naphthyl-indenyl)(2,3,5-trimethyl-cyclopentadienyl)-zirkoniumdichlorid]}hexan,
1,6-{Bis[methylsilyl-(2-ethyl-4-phenyl-indenyl)(2,3,5-trimethyl-cyclopentadienyl)-zirkoniumdichlorid]}hexan,
1,2-{Bis[methylsilyl-(fluorenyl)(cyclopentadienyl)zirkoniumdichlorid]}ethan,
1,2-{Bis[methylsilyl-(indenyl)(cyclopentadienyl)zirkoniumdichlorid]}ethan,
1,2-{Bis[methylsilyl-(fluorenyl)(3-methyl-cyclopentadienyl)zirkoniumdichlorid]}ethan,
1,2-{Bis[methylsilyl-(indenyl)(3-methyl-cyclopentadienyl)zirkoniumdichlorid]}ethan,
1,2-{Bis[methylsilyl-(fluorenyl)(3-isopropyl-cyclopentadienyl)zirkoniumdichlorid]}ethan,
1,2-{Bis[methylsilyl-(indenyl)(3-isopropyl-cyclopentadienyl)zirkoniumdichlorid]}ethan,
1,2-{Bis[methylsilyl-(2,7-di-tert.-butyl-fluorenyl)lcyclopentadienyl)zirkoniumdichlorid]}-ethan,
1,2-{Bis[methylsilyl-(2-methyl-indenyl)(cyclopentadienyl)zirkoniumdichlorid]}ethan,
1,2-{Bis[methylsilyl-(2-methyl-4-phenyl-indenyl)(cyclopentadienyl)zirkoniumdichlorid]}-ethan,
1,2-{Bis[methylsilyl-(4-phenyl-indenyl)(cyclopentadienyl)zirkoniumdichlorid]}ethan,
1,2-{Bis[methylsilyl-(2-methyl-4-phenylindenyl)(2,3,5-trimethyl-cyclopentadienyl)-zirkoniumdichlorid]}ethan,
1,2-{Bis[methylsilyl-(fluorenyl)(3-phenyl-cyclopentadienyl)zirkoniumdichlorid]}ethan,
1,2-{Bis[methylsilyl-(indenyl)(3-phenyl-cyclopentadienyl)zirkoniumdichlorid]}ethan,
1,2-{Bis[methylsilyl-(2-methyl-4,5-benzo-indenyl)(cyclopentadienyl)zirkoniumdichlorid]}-ethan,
1,2-{Bis[methylsilyl-(2-methyl-4,6-diisopropyl-indenyl)(cyclopentadienyl)-zirkoniumdichlorid]}ethan,
1,2-{Bis[methylsilyl-(2-methyl-4-(1-naphthyl-indenyl)(cyclopentadienyl)-zirkoniumdichlorid]}ethan,
1,2-{Bis[methylsilyl-(2-ethyl-4-phenyl-indenyl)(cyclopentadienyl)zirkoniumdichlorid]}-ethan,
1,2-{Bis[methylsilyl-(2-methyl-4,5-benzo-indenyl)(2,3,5-trimethyl-cyclopentadienyl)-zirkoniumdichlorid]}ethan,
1,2-{Bis[methylsilyl-(2-methyl-4,6-diisopropyl-indenyl)(2,3,5-trimethyl-cyclopentadienyl)zirkoniumdichlorid]}ethan,
1,2-{Bis[methylsilyl-(2-methyl-4-(1-naphthyl-indenyl)(2,3,5-trimethyl-cyclopentadienyl)-zirkoniumdichlorid]}ethan,
1,2-{Bis(methylsilyl-(2-ethyl-4-phenyl-indenyl)(2,3,5-trimethyl-cyclopentadienyl)-zirkoniumdichlorid]}ethan,
1,4-Disilacyclohexan-1,4-diyliden[(fluorenyl)(cyclopentadienyl)zirkoniumdichlorid],
1,4-Disilacyclohexan-1,4-diyliden[(indenyl)(cyclopentadienyl)zirkoniumdichlorid],
1,4-Disilacyclohexan-1,4-diyliden[(fluorenyl)(3-methyl-cyclopentadienyl)-zirkoniumdichlorid],
1,4-Disilacyclohexan-1,4-diyliden[(indenyl)(3-methyl-cyclopentadienyl)-zirkoniumdichlorid],
1,4-Disilacyclohexan-1,4-diyliden[(fluorenyl)(3-isopropyl-cyclopentadienyl)-zirkoniumdichlorid],
1,4-Disilacyclohexan-1,4-diyliden[(indenyl)(3-isopropyl-cyclopentadienyl)-zirkoniumdichlorid],
1,4-Disilacyclohexan-1,4-diyliden[(2,7-di-tert.-butyl-fluorenyl)(cyclopentadienyl)-zirkoniumdichlorid],
1,4-Disilacyclohexan-1,4-diyliden[(2-methyl-indenyl)(cyclopentadienyl)-zirkoniumdichlorid],
1,4-Disilacyclohexan-1,4-diyliden[(2-methyl-4-phenyl-indenyl)(cyclopentadienyl)-zirkoniumdichlorid],
1,4-Disilacyclohexan-1,4-diylidenl(4-phenyl-indenyl)(cyclopentadienyl)-zirkoniumdichlorid],
1,4-Disilacyclohexan-1,4-diyliden[(2-methyl-4-phenylindenyl)(2,3,5-trimethyl-cyclopentadienyl)zirkoniumdichlorid],
1,4-Disilacyclohexan-1,4-diyliden[(fluorenyl)(3-phenyl-cyclopentadienyl)-zirkoniumdichlorid],
1,4-Disilacyclohexan-1,4-diyliden[(indenyl)(3-phenyl-cyclopentadienyl)-zirkoniumdichlorid],
1,4-Disilacyclohexan-1,4-diyliden[(2-methyl-4,5-benzo-indenyl)(cyclopentadienyl)-zirkoniumdichlorid],
1,4-Disilacyclohexan-1,4-diyliden[(2-methyl-4,6-diisopropyl-indenyl)(cyclopentadienyl)-zirkoniumdichlorid],
1,4-Disilacyclohexan-1,4-diyliden[(2-methyl-4-(1-naphthyl-indenyl)(cyclopentadienyl)-zirkoniumdichlorid],
1,4-Disilacyclohexan-1,4-diyliden[(2-ethyl-4-phenyl-indenyl)(cyclopentadienyl)-zirkoniumdichlorid],
1,4-Disilacyclohexan-1,4-diyliden[(2-methyl-4,5-benzo-indenyl)(2,3,5-trimethyl-cyclopentadienyl)zirkoniumdichlorid],
1,4-Disilacyclohexan-1,4-diyliden[(2-methyl-4,6-diisopropyl-indenyl)(2,3,5-trimethylcyclopentadienyl)zirkoniumdichlorid],
1,4-Disilacyclohexan-1,4-diyliden[(2-methyl-4-(1-naphthyl-indenyl)(2,3,5-trimethylcyclopentadienyl)zirkoniumdichlorid],
1,4-Disilacyclohexan-1,4-diyliden[(2-ethyl-4-phenyl-indenyl)(2,3,5-trimethylcyclopentadienyl)zirkoniumdichlorid],
9,10-Dihydro-9,10-disilaanthracen-9,10-diyliden[(fluorenyl)(cyclopentadienyl)-zirkoniumdichlorid],
9,10-Dihydro-9,10-disilaanthracen-9,10-diyliden[(indenyl)(cyclopentadienyl)-zirkoniumdichlorid],
9,10-Dihydro-9,10-disilaanthracen-9,10-diyliden[(fluorenyl)(3-methyl-cyclopentadienyl)-zirkoniumdichlorid],
9,10-Dihydro-9,10-disilaanthracen-9,10-diyliden[(indenyl)(3-methyl-cyclopentadienyl)-zirkoniumdichlorid],
9,10-Dihydro-9,10-disilaanthracen-9,10-diyliden[(fluorenyl)(3-isopropyl-cyclopentadienyl)zirkoniumdichlorid],
9,10-Dihydro-9,10-disilaanthracen-9,10-diyliden[(indenyl)(3-isopropyl-cyclopentadienyl)-zirkoniumdichlorid],
9,10-Dihydro-9,10-disilaanthracen-9,10-diyliden[(2,7-di-tert.-butyl-fluorenyl)-(cyclopentadienyl)zirkoniumdichlorid],
9,10-Dihydro-9,10-disilaanthracen-9,10-diyliden[(2-methyl-indenyl)(cyclopentadienyl)-zirkoniumdichlorid],
9,10-Dihydro-9,10-disilaanthracen-9,10-diyliden[(2-methyl-4-phenyl-indenyl)-(cyclopentadienyl)zirkoniumdichlorid],
9,10-Dihydro-9,10-disilaanthracen-9,10-diyliden[(4-phenyl-indenyl)(cyclopentadienyl)-zirkoniumdichlorid],
9,10-Dihydro-9,10-disilaanthracen-9,10-diyliden[(2-methyl-4-phenylindenyl)(2,3,5-trimethyl-cyclopentadienyl)zirkoniumdichlorid],
9,10-Dihydro-9,10-disilaanthracen-9,10-diyliden[(fluorenyl)(3-phenyl-cyclopentadienyl)-zirkoniumdichlorid],
9,10-Dihydro-9,10-disilaanthracen-9,10-diyliden[(indenyl)(3-phenyl-cyclopentadienyl)-zirkoniumdichlorid],
9,10-Dihydro-9,10-disilaanthracen-9,10-diyliden[(2-methyl-4,5-benzo-indenyl)-(cyclopentadienyl)zirkoniumdichlorid],
9,10-Dihydro-9,10-disilaanthracen-9,10-diyliden[(2-methyl-4,6-diisopropyl-indenyl)-(cyclopentadienyl)zirkoniumdichlorid],
9,10-Dihydro-9,10-disilaanthracen-9,10-diyliden[(2-methyl-4-(1-naphthyl-indenyl)-(cyclopentadienyl)zirkoniumdichlorid],
9,10-Dihydro-9,10-disilaanthracen-9,10-diyliden[(2-ethyl-4-phenyl-indenyl)-(cyclopentadienyl)zirkoniumdichlorid],
9,10-Dihydro-9,10-disilaanthracen-9,10-diyliden[(2-methyl-4,5-benzo-indenyl)-(2,3,5-trimethyl-cyclopentadienyl)zirkoniumdichlorid],
9,10-Dihydro-9,10-disilaanthracen-9,10-diyliden[(2-methyl-4,6-diisopropyl-indenyl)-(2,3,5-trimethylcyclopentadienyl)zirkoniumdichlorid],
9,10-Dihydro-9,10-disilaanthracen-9,10-diyliden[(2-methyl-4-(1-naphthyl-indenyl)(2,3,5-trimethylcyclopentadienyl)zirkoniumdichlorid],
9,10-Dihydro-9,10-disilaanthracen-9,10-diyliden[(2-ethyl-4-phenyl-indenyl)(2,3,5-trimethylcyclopentadienyl)zirkoniumdichlorid],

1,6-{Bis[methylsilyl-bis(indenyl)zirkoniumdichlorid]}hexan,
1,6-{Bis[methylsilyl-bis(2-methyl-indenyl)zirkoniumdichlorid]}hexan,
1,6-{Bis[methylsilyl-bis(2-methyl-4-phenyl-indenyl)zirkoniumdichlorid]}hexan,
1,6-{Bis[methylsilyl-bis(2-methyl-4,5-benzo-indenyl)zirkoniumdichlorid]}hexan,
1,6-{Bis[methylsilyl-bis(2-methyl-4-(1-naphthyl)indenyl)zirkoniumdichlorid]}hexan,
1,6-{Bis[methylsilyl-bis(2-methyl-4-isopropyl-indenyl)zirkoniumdichlorid]}hexan,
1,6-{Bis[methylsilyl-bis(2-methyl-4,6-diisopropyl-indenyl)zirkoniumdichlorid]}hexan,
1,6-{Bis[methylsilyl-bis(2-ethyl-indenyl)zirkoniumdichlorid]}hexan,
1,6-{Bis[methylsilyl-bis(2-ethyl-4-phenyl-indenyl)zirkoniumdichlorid]}hexan,
1,6-{Bis[methylsilyl-bis(2-ethyl-4-(1-naphthyl)indenyl)zirkoniumdichlorid]}hexan,
1,6-{Bis[methylsilyl-bis(2-ethyl-α-acenaphth-indenyl)zirkoniumdichlorid]}hexan,

1,2-{Bis[methylsilyl-bis(indenyl)zirkoniumdichlorid]}ethan,
1,2-{Bis[methylsilyl-bis(2-methyl-indenyl)zirkoniumdichlorid]}ethan,
1,2-{Bis[methylsilyl-bis(2-methyl-4-phenyl-indenyl)zirkoniumdichlorid]}ethan,
1,2-{Bis[methylsilyl-bis(2-methyl-4,5-benzo-indenyl)zirkoniumdichlorid]}ethan,
1,2-{Bis[methylsilyl-bis(2-methyl-4-(1-naphthyl)indenyl)zirkoniumdichlorid]}ethan,
1,2-{Bis[methylsilyl-bis(2-methyl-4-isopropyl-indenyl)zirkoniumdichlorid]}ethan,
1,2-{Bis[methylsilyl-bis(2-methyl-4,6-diisopropyl-indenyl)zirkoniumdichlorid]}ethan,
1,2-{Bis[methylsilyl-bis(2-ethyl-indenyl)zirkoniumdichlorid]}ethan,
1,2-{Bis[methylsilyl-bis(2-ethyl-4-phenyl-indenyl)zirkoniumdichlorid]}ethan,
1,2-{Bis[methylsilyl-bis(2-ethyl-4-(1-naphthyl)indenyl)zirkoniumdichlorid]}ethan,
1,2-{Bis[methylsilyl-bis(2-ethyl-α-acenaphth-indenyl)zirkoniumdichlorid]}ethan,

1,2-{Bis[ethylsilyl-bis(indenyl)zirkoniumdichlorid]}ethan,
1,2-{Bis[ethylsilyl-bis(2-methyl-indenyl)zirkoniumdichlorid]}ethan,
1,2-{Bis[ethylsilyl-bis(2-methyl-4-phenyl-indenyl)zirkoniumdichlorid]}ethan,
1,2-{Bis[ethylsilyl-bis(2-methyl-4,5-benzo-indenyl)zirkoniumdichlorid]}ethan,
1,2-{Bis[ethylsilyl-bis(2-methyl-4-(1-naphthyl)indenyl)zirkoniumdichlorid]}ethan,
1,2-{Bis[ethylsilyl-bis(2-methyl-4-isopropyl-indenyl)zirkoniumdichlorid]}ethan,
1,2-{Bis[ethylsilyl-bis(2-methyl-4,6-diisopropyl-indenyl)zirkoniumdichlorid]}ethan,
1,2-{Bis[ethylsilyl-bis(2-ethyl-indenyl)zirkoniumdichlorid]}ethan,
1,2-{Bis[ethylsilyl-bis(2-ethyl-4-phenyl-indenyl)zirkoniumdichlorid]}ethan,
1,2-{Bis[ethylsilyl-bis(2-ethyl-4-(1-naphthyl)indenyl)zirkoniumdichlorid]}ethan,
1,2-{Bis[ethylsilyl-bis(2-ethyl-α-acenaphth-indenyl)zirkoniumdichlorid]}ethan,

1,6-{Bis[ethylsilyl-bis(indenyl)zirkoniumdichlorid]}hexan,
1,6-{Bis[ethylsilyl-bis(2-methyl-indenyl)zirkoniumdichlorid]}hexan,
1,6-{Bis[ethylsilyl-bis(2-methyl-4-phenyl-indenyl)zirkoniumdichlorid]}hexan,
1,6-{Bis[ethylsilyl-bis(2-methyl-4,5-benzo-indenyl)zirkoniumdichlorid]}hexan,
1,6-{Bis[ethylsilyl-bis(2-methyl-4-(1-naphthyl)indenyl)zirkoniumdichlorid]}hexan,
1,6-{Bis[ethylsilyl-bis(2-methyl-4-isopropyl-indenyl)zirkoniumdichlorid]}hexan,
1,6-{Bis[ethylsilyl-bis(2-methyl-4,6-diisopropyl-indenyl)zirkoniumdichlorid]}hexan,
1,6-{Bis[ethylsilyl-bis(2-ethyl-indenyl)zirkoniumdichlorid]}hexan,
1,6-{Bis[ethylsilyl-bis(2-ethyl-4-phenyl-indenyl)zirkoniumdichlorid]}hexan,
1,6-{Bis[ethylsilyl-bis(2-ethyl-4-(1-naphthyl)indenyl)zirkoniumdichlorid]}hexan,
1,6-{Bis[ethylsilyl-bis(2-ethyl-α-acenaphth-indenyl)zirkoniumdichlorid]}hexan,

1,3-{Bis[methylsilyl-bis(indenyl)zirkoniumdichlorid]}propan,
1,3-{Bis[methylsilyl-bis(2-methyl-indenyl)zirkoniumdichlorid]}propan,
1,3-{Bis[methylsilyl-bis(2-methyl-4-phenyl-indenyl)zirkoniumdichlorid]}propan,
1,3-{Bis[methylsilyl-bis(2-methyl-4,5-benzo-indenyl)zirkoniumdichlorid]}propan,
1,3-{Bis[methylsilyl-bis(2-methyl-4-(1-naphthyl)indenyl)zirkoniumdichlorid]}propan,
1,3-{Bis[methylsilyl-bis(2-methyl-4-isopropyl-indenyl)zirkoniumdichlorid]}propan,
1,3-{Bis[methylsilyl-bis(2-methyl-4,6-diisopropyl-indenyl)zirkoniumdichlorid]}propan,
1,3-{Bis[methylsilyl-bis(2-ethyl-indenyl)zirkoniumdichlorid]}propan,
1,3-{Bis[methylsilyl-bis(2-ethyl-4-phenyl-indenyl)zirkoniumdichlorid]}propan,
1,3-{Bis[methylsilyl-bis(2-ethyl-4-(1-naphthyl)indenyl)zirkoniumdichlorid]}propan,
1,3-{Bis[methylsilyl-bis(2-ethyl-α-acenaphth-indenyl)zirkoniumdichlorid]}propan,

1,4-Disilacyclohexan-1,4-diyliden[bis(indenyl)zirkoniumdichlorid],
1,4-Disilacyclohexan-1,4-diyliden[bis(2-methyl-indenyl)zirkoniumdichlorid],
1,4-Disilacyclohexan-1,4-diyliden[bis(2-ethyl-indenyl)zirkoniumdichlorid],
1,4-Disilacyclohexan-1,4-diyliden[bis(2-methyl-4-phenyl-indenyl)zirkoniumdichlorid],
1,4-Disilacyclohexan-1,4-diyliden[bis(2-methyl-4-(1-naphthyl-indenyl)zirkoniumdichlorid],
1,4-Disilacyclohexan-1,4-diyliden[bis(2-methyl-4-isopropyl-indenyl)zirkoniumdichlorid],
1,4-Disilacyclohexan-1,4-diyliden[bis(2-methyl-4,6-diisopropyl-indenyl)zirkoniumdichlorid],
1,4-Disilacyclohexan-1,4-diyliden[bis(2-methyl-4,5-benzoindenyl)zirkoniumdichlorid],
1,4-Disilacyclohexan-1,4-diyliden[bis(2-ethyl-4-phenyl-indenyl)zirkoniumdichlorid],
1,4-Disilacyclohexan-1,4-diyliden[bis(2-methyl-α-acenaphth-indenyl)zirkoniumdichlorid],

9,10-Dihydro-9,10-disilaanthracen-9,10-diyliden[bis(indenyl)zirkoniumdichlorid],
9,10-Dihydro-9,10-disilaanthracen-9,10-diyliden[bis(2-methyl-indenyl)zirkoniumdichlorid],
9,10-Dihydro-9,10-disilaanthracen-9,10-diyliden[bis(2-ethyl-indenyl)zirkoniumdichlorid],
9,10-Dihydro-9,10-disilaanthracen-9,10-diyliden[bis(2-methyl-4-phenyl-indenyl)zirkoniumdichlorid],
9,10-Dihydro-9,10-disilaanthracen-9,10-diyliden[bis(2-methyl-4-(1-naphthyl-indenyl)zirkoniumdichlorid],
9,10-Dihydro-9,10-disilaanthracen-9,10-diyliden[bis(2-methyl-4-isopropyl-indenyl)zirkoniumdichlorid],
9,10-Dihydro-9,10-disilaanthracen-9,10-diyliden[bis(2-methyl-4,6-diisopropyl-indenyl)zirkoniumdichlorid],
9,10-Dihydro-9,10-disilaanthracen-9,10-diyliden[bis(2-methyl-4,5-benzoindenyl)zirkoniumdichlorid],
9,10-Dihydro-9,10-disilaanthracen-9,10-diyliden[bis(2-ethyl-4-phenyl-indenyl)zirkoniumdichlorid],
9,10-Dihydro-9,10-disilaanthracen-9,10-diyliden[bis(2-methyl-α-acenaphthindenyl)zirkoniumdichlorid],

1,4-Dihydro-1,4-disilabenzol-1,4-diyliden[bis(indenyl)zirkoniumdichlorid],
1,4-Dihydro-1,4-disilabenzol-1,4-diyliden[bis(2-methyl-indenyl)zirkoniumdichlorid],
1,4-Dihydro-1,4-disilabenzol-1,4-diyliden[bis(2-ethyl-indenyl)zirkoniumdichlorid],
1,4-Dihydro-1,4-disilabenzol-11,4-diyliden[bis(2-methyl-4-phenyl-indenyl)zirkoniumdichlorid],
1,4-Dihydro-1,4-disilabenzol-1,4-diyliden[bis(2-methyl-4-(1-naphthyl-indenyl)zirkoniumdichlorid],
1,4-Dihydro-1,4-disilabenzol-1,4-diyliden[bis(2-methyl-4-isopropyl-indenyl)zirkoniumdichlorid],
1,4-Dihydro-1,4-disilabenzol-1,4-diyliden[bis(2-methyl-4,6-diisopropylindenyl)zirkoniumdichlorid],
1,4-Dihydro-1,4-disilabenzol-1,4-diyliden[bis(2-methyl-4,5-benzoindenyl)zirkoniumdichlorid],
1,4-Dihydro-1,4-disilabenzol-1,4-diyliden[bis(2-ethyl-4-phenyl-indenyl)zirkoniumdichlorid],
1,4-Dihydro-1,4-disilabenzol-1,4-diyliden[bis(2-methyl-α-acenaphthindenyl)zirkoniumdichlorid],

1,4-Dihydro-1,4-disila-2,3,5,6-tetraphenyl-benzol-1,4-diyliden[bis(indenyl)zirkoniumdichlorid],
1,4-Dihydro-1,4-disila-2,3,5,6-tetraphenyl-benzol-1,4-diyliden[bis(2-methyl-indenyl)zirkoniumdichlorid],
1,4-Dihydro-1,4-disila-2,3,5,6-tetraphenyl-benzol-1,4-diyliden[bis(2-ethyl-indenyl)zirkoniumdichlorid],
1,4-Dihydro-1,4-disila-2,3,5,6-tetraphenyl-benzol-1,4-diyliden[bis(2-methyl-4-phenyl-indenyl)zirkoniumdichlorid],
1,4-Dihydro-1,4-disila-2,3,5,6-tetraphenyl-benzol-1,4-diyliden[bis(2-methyl-4-(1-naphthyl-indenyl)zirkoniumdichlorid],
1,4-Dihydro-1,4-disila-2,3,5,6-tetraphenyl-benzol-1,4-diyliden[bis(2-methyl-4-isopropyl-indenyl)zirkoniumdichlorid],
1,4-Dihydro-1,4-disila-2,3,5,6-tetraphenyl-benzol-1,4-diyliden[bis(2-methyl-4,6-diisopropylindenyl)zirkoniumdichlorid],
1,4-Dihydro-1,4-disila-2,3,5,6-tetraphenyl-benzol-1,4-diyliden[bis(2-methyl-4,5-benzoindenyl)zirkoniumdichlorid],
1,4-Dihydro-1,4-disila-2,3,5,6-tetraphenyl-benzol-1,4-diyliden[bis(2-ethyl-4-phenylindenyl)zirkoniumdichlorid],
1,4-Dihydro-1,4-disila-2,3,5,6-tetraphenyl-benzol-1,4-diyliden[bis(2-methyl-α-acenaphth-indenyl)zirkoniumdichlorid],

1,6-{Bis[methylsilyl-(2-methyl-4-phenyl-indenyl)(2-methyl-indenyl)-zirkoniumdichlorid]}hexan,
1,6-{Bis[methylsilyl-(2-methyl-4-phenyl-indenyl)(indenyl)-zirkoniumdichlorid]}hexan,
1,6-{Bis[methylsilyl-(2-methyl-4-phenyl-indenyl)(2-methyl-4,5-benzo-indenyl)-zirkoniumdichlorid]}hexan,
1,6-{Bis[methylsilyl-(2-methyl-4-phenyl-indenyl)(2-methyl-4-(1-naphthyl)indenyl-zirkoniumdichlorid]}hexan,
1,6-{Bis[methylsilyl-(2-methyl-4-phenyl-indenyl)(2-methyl-4-isopropyl-indenyl)zirkoniumdichlorid]}hexan,
1,6-{Bis[methylsilyl-(2-methyl-4-phenyl-indenyl)(2-methyl-4,6-diisopropyl-indenyl)-zirkoniumdichlorid]}hexan,
1,6-{Bis(methylsilyl-(2-methyl-4-phenyl-indenyl)(2-ethyl-indenyl)-zirkoniumdichlorid]}hexan,
1,6-{Bis[methylsilyl-(2-methyl-4-phenyl-indenyl)(2-ethyl-4-phenyl-indenyl)-zirkoniumdichlorid]}hexan,
1,6-{Bis[methylsilyl(2-methyl-4-phenyl-indenyl)(2-methyl-a-acenaphth-indenyl)-zirkoniumdichlorid]}hexan,

1,2-{Bis[methylsilyl-(2-methyl-4-phenyl-indenyl)(indenyl)-zirkoniumdichlorid}-ethan,
1,2-{Bis[methylsilyl-(2-methyl-4-phenyl-indenyl)(2-methyl-indenyl)-zirkoniumdichlorid]}ethan,
1,2-{Bis[methylsilyl-(2-methyl-4-phenyl-indenyl)(2-methyl-4,5-benzo-lindenyl)-zirkoniumdichlorid]}ethan,
1,2-{Bis(methylsilyl-(2-methyl-4-phenyl-indenyl)(2-methyl-4,5-benzo-indenyl)-zirkoniumdichlorid]}ethan,
1,2-{Bis(methylsilyl-(2-methyl-4-phenyl-indenyl)(2-methyl-4-(1-naphthyl)indenyl)-zirkoniumdichlorid}ethan,
1,2-{Bis(methylsilyl-(2-methyl-4-phenyl-indenyl)(2-methyl-4-isopropyl-indenyl)-zirkoniumdichlorid]}ethan
1,2-{Bis(methylsilyl-(2-methyl-4-phenyl-indenyl)(2-methyl-4,6-diisopropyl-indenyl)-zirkoniumdichlorid]}ethan,
1,2-(Bis[methylsilyl-(2-methyl-4-phenyl-indenyl)(2-ethyl-indenyl)-zirkoniumdichlorid]}ethan,
1,2-{Bis[methylsilyl-(2-methyl-4-phenyl-indenyl)(2-ethyl-4-phenyl-indenyl)-zirkoniumdichlorid]}ethan
1,2-{Bis[methylsilyl-(2-methyl-4-phenyl-indenyl)(2-ethyl-4-(1-naphthyl)indenyl)-zirkoniumdichlorid]}ethan,
1,2-{Bis(methylsilyl-(2-methyl-4-phenyl-indenyl)(2-methyl-α-acenaphth-indenyl)-zirkoniumdichlorid]}ethan,
1,4-Disilacyclohexan-1,4-diyliden[(2-methyl-4-phenyl-indenyl)(indenyl)-zirkoniumdichlorid],
1,4-Disilacyclohexan-1,4-diyliden[[2-methyl-4-phenyl-indenyl)(2-methyl-indenyl)-zirkoniumdichlorid],
1,4-Disilacyclohexan-1,4-diyliden[(2-methyl-4-phenyl-indenyl)(2-ethyl-indenyl)-zirkoniumdichlorid],
1,4-Disilacyclohexan-1,4-diyliden[2-methyl-4-phenyl-indenyl)(2-methyl-4-(1-naphthyl-indenyl)zirkoniumdichlorid],
1,4-Disilacyclohexan-1,4-diyliden[(2-methyl-4-phenyl-indenyl)(2-methyl-4-isopropyl-indenyl)zirkoniumdichlorid],
1,4-Disilacyclohexan-1,4-diyliden[(2-methyl-4-phenyl-indenyl)(2-methyl-4,6-diisopropylindenyl)zirkoniumdichlorid],
1,4-Disilacyclohexan-1,4-diyliden[(2-methyl-4-phenyl-indenyl)(2-methyl-4,5-benzoindenyl)zirkoniumdichlorid],
1,4-Disilacyclohexan-1,4-diyliden[(2-methyl-4-phenyl-indenyl)(2-ethyl-4-phenyl-indenyl)zirkoniumdichlorid],
1,4-Disilacyclohexan-1,4-diyliden[(2-methyl-4-phenyl-indenyl)(2-methyl-α-methyl-acenaphth-indenyl)zirkoniumdichlorid],

9,10-Dihydro-9,10-disilaanthracen-9,10-diyliden[(2-methyl-4-phenyl-indenyl)-(indenyl)zirkoniumdichlorid],
9,10-Dihydro-9,10-disilaanthracen-9,10-diyliden[(2-methyl-4-phenyl-indenyl)(2-methyl-indenyl)zirkoniumdichlorid],
9,10-Dihydro-9,10-disilaanthracen-9,10-diyliden[(2-methyl-4-phenyl-indenyl)(2-ethyl-indenyl)zirkoniumdichlorid],
9,10-Dihydro-9,10-disilaanthracen-9,10-diyliden[(2-methyl-4-phenyl-indenyl)(2-methyl-4-isopropyl-indenyl)zirkoniumdichlorid],
9,10-Dihydro-9,10-disilaanthracen-9,10-diyliden[(2-methyl-4-phenyl-indenyl)(2-methyl-4,6-diisopropylindenyl)zirkoniumdichlorid],
9,10-Dihydro-9,10-disilaanthracen-9,10-diyliden[(2-methyl-4-phenyl-indenyl)(2-methyl-4,5-benzoindenyl)zirkoniumdichlorid],
9,10-Dihydro-9,10-disilaanthracen-9,10-diyliden[(2-methyl-4-phenyl-indenyl)(2-ethyl-4-phenyl-indenyl)zirkoniumdichlorid],
9,10-Dihydro-9,10-disilaanthracen-9,10-diyliden[(2-methyl-4-phenyl-indenyl)(2-methyl-α-acenaphth-indenyl)zirkoniumdichlorid],

1,4-Dihydro-1,4-disilabenzol-1,4-diyliden[(2-methyl-4-phenyl-indenyl)(indenyl-zirkoniumdichlorid],
1,4-Dihydro-1,4-disilabenzol-1,4-diyliden[(2-methyl-4-phenyl-indenyl)(2-methyl-indenyl)zirkoniumdichlorid],
1,4-Dihydro-1,4-disilabenzol-1,4-diyliden[(2-methyl-4-phenyl-indenyl)(2-ethyl-indenyl)zirkoniumdichlorid],
1,4-Dihydro-1,4-disilabenzol-1,4-diyliden[(2-methyl-4-phenyl-indenyl)(2-methyl-4-(1-naphthyl-indenyl)zirkoniumdichlorid],
1,4-Dihydro-1,4-disilabenzol-1,4-diyliden[(2-methyl-4-phenyl-indenyl)(2-methyl-4-isopropyl-indenyl)zirkoniumdichlorid],
1,4-Dihydro-1,4-disilabenzol-1,4-diyliden[(2-methyl-4-phenyl-indenyl)(2-methyl-4,6-diisopropylindenyl)zirkoniumdichlorid]
1,4-Dihydro-1,4-disilabenzol-1,4-diyliden[(2-methyl-4-phenyl-indenyl)(2-methyl-4,5-benzoindenyl)zirkoniumdichlorid],
1,4-Dihydro-1,4-disilabenzol-1,4-diyliden[(2-methyl-4-phenyl-indenyl)(2-ethyl-4-phenyl-indenyl)zirkoniumdichlorid] und
1,4-Dihydro-1,4-disilabenzol-1,4-diyliden[(2-methyl-4-phenyl-indenyl)(2-methyl-α-acenaphth-indenyl)zirkoniumdichlorid].

Die Herstellung der erfindungsgemäßen Metallocene soll durch das nachfolgende Reaktionsschema veranschaulicht werden.

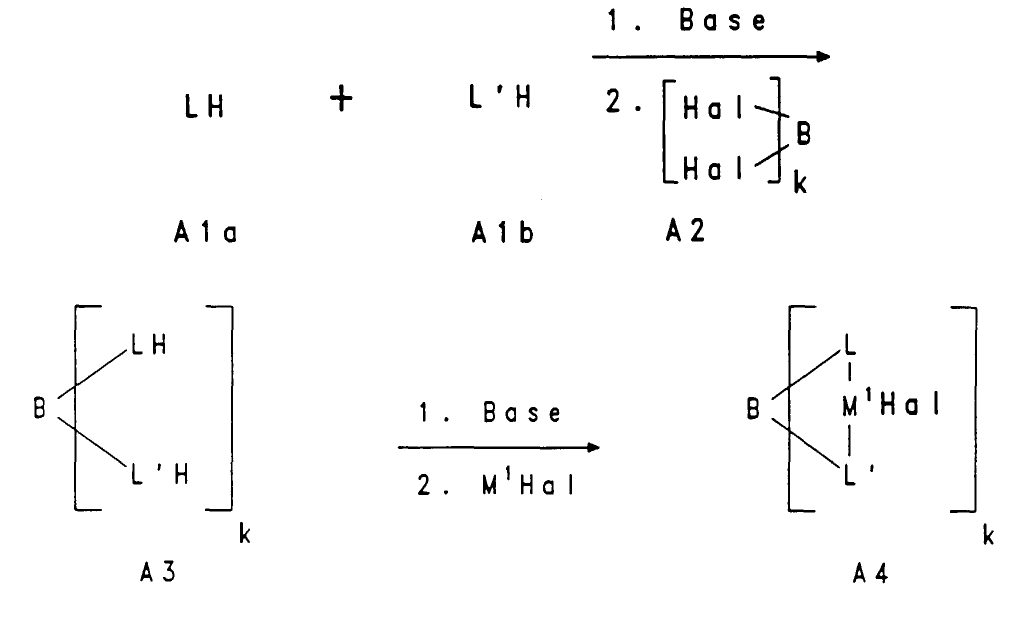

Gegebenenfalls können Reste X ungleich Halogen in das Metallocen A4 eingeführt werden, z. B. durch Umsetzung mit Alkylierungsmitteln wie Methyllithium, um zu solchen Metallocenen der Formel I zu gelangen, in denen X ungleich Halogen ist.

Die Indenderivate sind kommerziell erhältlich oder können nach literaturbekannten Verfahren hergestellt werden (EP 567 952, EP 545 304).

Die Verfahren zur Herstellung der Ligandsysteme und die Umsetzung zu den verbrückten Metallocenen der Formel I ist im Prinzip bekannt (EP 574 597, EP 320 762, EP 376 154).

Hierzu werden LH und L'H mit einer starken Base wie beispielsweise Butyllithium oder Kaliumhydrid in einem inerten Lösungsmittel deprotoniert und mit einem Reagenz der Formel A2 zu dem Ligandsystem der Formel A3 oder einem seiner Isomeren umgesetzt, wobei die Doppelbindung im Fünfring außer zwischen C(2) und C(3) auch zwischen C(1) und C(2) liegen kann. Das Ligandsystem wird anschließend mit 2 k Äquivalenten einer starken Base wie beispielsweise Butyllithium oder Kaliumhydrid in einem inerten Lösemittel deprotoniert und mit k Äquivalenten eines Metalltetrahalogenids wie beispielsweise Zirkoniumtetrachlorid in einem geeigneten Lösemittel zu A4 umgesetzt. Geeignete Lösemittel sind aliphatische oder aromatische Lösemittel, wie beispielsweise Hexan oder Toluol, etherische Lösemittel, wie beispielsweise Tetrahydrofuran oder Diethylether oder halogenierte Kohlenwasserstoffe, wie beispielsweise Methylenchlorid oder halogenierte aromatische Kohlenwasserstoffe wie beispielsweise o-Dichlorbenzol. Es kann auch ein Gemisch mehrerer Metallhalogenide, beispielsweise Zirkoniumtetrachlorid und Hafniumtetrachlorid eingesetzt werden. Auf diese Weise gelangt man zu mehrkernigen Metallocenen, die in einem Molekül verschiedene Metalle tragen.

Die vorliegende Erfindung betrifft auch ein Verfahren zur Herstellung eines Olefinpolymers durch Polymerisation mindestens eines Olefins, in Gegenwart eines Katalysators, welcher mindestens ein mehrkerniges Metallocen und mindestens einen Cokatalysator enthält, dadurch gekennzeichnet, daß das mehrkernige Metallocen eine Verbindung der Formel I ist.

Die Polymerisation kann eine Homopolymerisation oder eine Copolymerisation sein. Bevorzugt werden Olefine der Formel R^{a}-CH=CH-R^{b} homo- oder copolymerisiert, worin R^{a} und R^{b} gleich oder verschieden sind und ein Wasserstoffatom oder einen Kohlenwasserstoffrest mit 1 bis 20 C-Atomen, insbesondere 1 bis 10 C-Atome, bedeuten, oder R^{a} und R^{b} zusammen mit den sie verbindenden Atomen einen oder mehrere Ringe bilden. Beispiele für solche Olefine sind 1-Olefine wie Ethylen, Propylen, 1-Buten, 1-Penten, 1-Hexen, 4-Methyl-1-penten oder 1-Octen, Styrol, Diene wie 1,3-Butadien oder 1,4-Hexadien und cyclische Olefine wie Norbornen, Tetracyclododecen, Norbornadien oder Vinylnorbornen.
Bevorzugt wird in dem erfindungsgemäßen Verfahren Ethylen oder Propylen homopolymerisiert, oder Ethylen mit einem oder mehreren 1-Olefinen mit 3-20 C-Atomen, wie Propylen, und/oder einem oder mehreren Dienen mit 4-20 C-Atomen, wie 1,3-Butadien, copolymerisiert. Beispiele von Copolymeren sind Ethylen/Propylen-Copolymere, Ethylen/Propylen/1,4-Hexadien-Copolymere, Ethylen/Propylen/5-Ethyliden-2-Norbornen-Copolymere oder Ethylen-Norbornen-Copolymere.

Bevorzugt enthält der in dem erfindungsgemäßen Verfahren eingesetzte Katalysator ein mehrkerniges Metallocen der Formel I und einen Cokatalysator. Es können auch Mischungen der erfindungsgemäßen mehrkernigen Metallocene mit einkernigen Metallocenen eingesetzt werden. Prinzipiell ist als Cokatalysator in dem erfindungsgemäßen Verfahren jede Verbindung geeignet, die aufgrund ihrer Lewis-Acidität das neutrale Metallocen in ein Kation überführen und dieses stabilisieren kann ("labile Koordination"). Darüber hinaus soll der Cokatalysator oder das aus ihm gebildete Anion keine weiteren Reaktionen mit dem gebildeten Metallocenkation eingehen (EP 427 697). Als Cokatalysator wird bevorzugt eine Aluminiumverbindung und/oder eine Borverbindung verwendet.

Die Borverbindung hat bevorzugt die Formel R¹⁶ₓNH₄₋ₓBR¹⁷₄, R¹⁶ₓPH₄₋ₓBR¹⁷₄, R¹⁶₃CBR¹⁷₄ oder BR¹⁷₃, worin x eine Zahl von 1 bis 4, bevorzugt 3, bedeutet, die Reste R¹⁶ gleich oder verschieden, bevorzugt gleich sind, und C₁-C₁₀-Alkyl oder C₆-C₁₈-Aryl sind, oder zwei Reste R¹⁶ zusammen mit dem sie verbindenden Atomen einen Ring bilden, und die Reste R¹⁷ gleich oder verschieden, bevorzugt gleich sind, und C₆-C₁₈-Aryl sind, das durch Alkyl, Haloalkyl oder Fluor substituiert sein kann. Insbesondere steht R¹⁶ für Ethyl, Propyl, Butyl oder Phenyl und R¹⁷ für Phenyl, Pentafluorophenyl, 3,5-Bistrifluoromethylphenyl, Mesityl, Xylyl oder Tolyl (EP 277 003, EP 277 004 und EP 426 638).

Bevorzugt wird als Cokatalysator eine Aluminiumverbindung wie Aluminoxan und/oder ein Aluminiumalkyl eingesetzt.

Als Cokatalysator wird besonders bevorzugt ein Aluminoxan, insbesondere ein Aluminoxan der Formel IIIa für den linearen Typ und/oder der Formel IIIb für den cyclischen Typ verwendet, 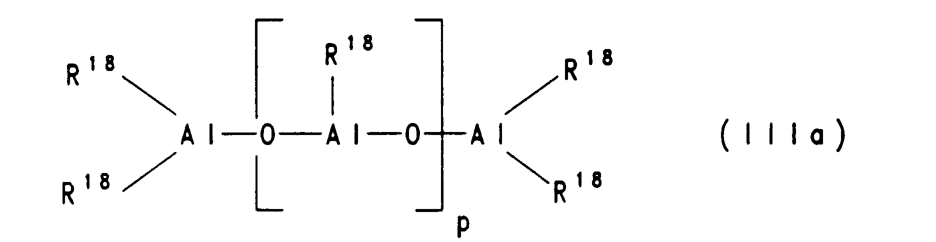 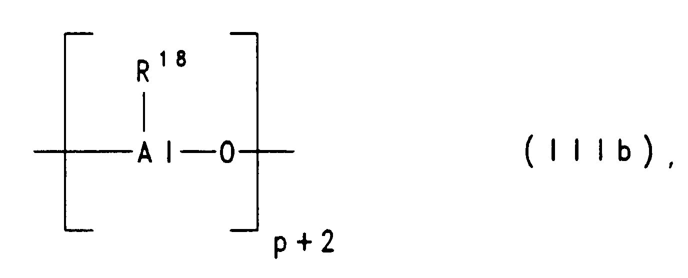 wobei in den Formeln IIIa und IIIb die Reste R¹⁸ gleich oder verschieden sein können und eine C₁-C₆- Alkylgrupppe, eine C₆-C₁₈-Arylgruppe, Benzyl oder Wasserstoff bedeuten, und p eine ganze Zahl von 2 bis 50, bevorzugt 10 bis 35 bedeutet.

Bevorzugt sind die Reste R¹⁸ gleich und bedeuten Methyl, Isobutyl, Phenyl oder Benzyl, besonders bevorzugt Methyl.

Sind die Reste R¹⁸ verschieden, so sind sie bevorzugt Methyl und Wasserstoff oder alternativ Methyl und Isobutyl, wobei Wasserstoff oder Isobutyl bevorzugt zu 0,01 bis 40 % (Zahl der Reste R¹⁸) enthalten sind.

Die Verfahren zur Herstellung der Aluminoxane sind bekannt.

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

Es ist möglich, das Metallocen vor dem Einsatz in der Polymerisationsreaktion mit einem Aluminoxan der Formel IIIa und/oder IIIb vorzuaktivieren. Dadurch wird die Polymerisationsaktivität deutlich erhöht und die Kornmorphologie verbessert. Die Voraktivierung der Übergangsmetallverbindung wird in Lösung vorgenommen. Bevorzugt wird dabei das Metallocen in einer Lösung des Aluminoxans in einem inerten Kohlenwasserstoff aufgelöst. Als inerter Kohlenwasserstoff eignet sich ein aliphatischer oder aromatischer Kohlenwasserstoff. Bevorzugt wird Toluol verwendet.

Die Konzentration des Aluminoxans in der Lösung liegt im Bereich von ca. 1 Gew.-% bis zur Sättigungsgrenze, vorzugsweise von 5 bis 30 Gew. %, jeweils bezogen auf die Gesamtlösungsmenge. Das Metallocen kann in der gleichen Konzentration eingesetzt werden, vorzugsweise wird es jedoch in einer Menge von 10⁻⁴ - 1 mol pro mol Aluminoxan eingesetzt. Die Voraktivierung beträgt 5 Minuten bis 60 Stunden, vorzugsweise 5 bis 60 Minuten. Man arbeitet bei einer Temperatur von -78 bis 100°C, vorzugsweise 0 bis 70°C.

Mit Hilfe des Metallocens kann eine Vorpolymerisation erfolgen. Zur Vorpolymerisation wird bevorzugt das (oder eines der) in der Polymerisation eingesetzte(n) Olefin(e) verwendet.

Zur Steuerung der Kornmorphologie kann das Metallocen auch auf einen Träger aufgebracht werden. Geeignete Trägermaterialien sind beispielsweise Silikagele, Aluminiumoxide, festes Aluminoxan oder andere anorganische Trägermaterialien wie beispielsweise Magnesiumchlorid. Ein geeignetes Trägermaterial ist auch ein Polyolefinpulver in feinverteilter Form. Die Herstellung eines geträgerten Katalysators kann beispielsweise wie in EP 578 838 beschrieben durchgeführt werden.

Bei Verwendung der obengenannten Cokatalysatoren besteht der eigentliche (aktive) Polymerisationskatalysator aus dem Reaktionsprodukt von Metallocen und einer der genannten Verbindungen. Daher wird zunächst dieses Reaktionsprodukt bevorzugt außerhalb des Polymerisationsreaktors in einem separaten Schritt unter Verwendung eines geeigneten Lösemittels hergestellt.

Zur Entfernung von im Olefin vorhandenen Katalysatorgiften ist eine Reinigung mit einem Aluminiumalkyl, beispielsweise Trimethylaluminium oder Triethylaluminium vorteilhaft. Diese Reinigung kann sowohl im Polymerisationssystem selbst erfolgen, oder das Olefin wird vor der Zugabe in das Polymerisationssystem mit der Al-Verbindung in Kontakt gebracht und anschließend wieder abgetrennt.

Die Polymerisation wird in bekannter Weise in Lösung, in Suspension oder in der Gasphase, kontinuierlich oder diskontinuierlich, ein- oder mehrstufig bei einer Temperatur von -60 bis 250°C, vorzugsweise 30 bis 100°C, besonders bevorzugt 50 bis 80°C, durchgeführt.

Als Molmassenregler und/oder zur Steigerung der Aktivität wird, falls erforderlich, Wasserstoff zugegeben. Der Gesamtdruck im Polymerisationssystem beträgt 0,5 bis 100 bar. Bevorzugt ist die Polymerisation in dem technisch besonders interessanten Druckbereich von 5 bis 64 bar.

Dabei wird das Metallocen in einer Konzentration, bezogen auf das Übergangsmetall von 10⁻³ bis 10⁻⁸, vorzugsweise 10⁻⁴ bis 10⁻⁷ mol Übergangsmetall pro dm³ Lösemittel bzw. pro dm³ Reaktorvolumen angewendet. Das Aluminoxan wird in einer Konzentration von 10⁻⁵ bis 10⁻¹ mol, vorzugsweise 10⁻⁴ bis 10⁻² mol pro dm³ Lösemittel bzw. pro dm³ Reaktorvolumen verwendet. Die anderen gerannten Cokatalysatoren werden in etwa äquimolaren Mengen zum Metallocen verwendet. Prinzipiell sind aber auch höhere Konzentrationen möglich.

Wenn die Polymerisation als Suspensions- oder Lösungspolymerisation durchgeführt wird, wird ein für das Ziegler-Niederdruckverfahren gebräuchliches inertes Lösemittel verwendet. Beispielsweise arbeitet man in einem aliphatischen oder cycloaliphatischen Kohlenwasserstoff; als solcher sei beispielsweise Propan, Butan, Hexan, Heptan, Isooctan, Cyclohexan, Methylcyclohexan, genannt. Weiterhin kann eine Benzin- bzw. hydrierte Dieselölfraktion benutzt werden. Brauchbar ist auch Toluol. Bevorzugt wird im flüssigen Monomeren polymerisiert.

Werden inerte Lösemittel verwendet, werden die Monomeren gasförmig oder flüssig zudosiert.

Die Dauer der Polymerisation ist beliebig, da das erfindungsgemäß zu verwendende Katalysatorsystem einen nur geringen zeitabhängigen Abfall der Polymerisationsaktivität zeigt.

Die nach dem erfindungsgemäßen Verfahren hergestellten Polymere sind zur Herstellung von Halbzeugen und extrudierten Formteilen wie Folien, Platten oder Großhohlkörpern (z.B. Rohre) geeignet. Es können bei geeigneter Wahl der Monomere auch Kautschuke oder Elastomere hergestellt werden.

Das erfindungsgemäße Verfahren zeichnet sich dadurch aus, daß die beschriebenen Metallocene im technisch besonders interessanten Temperaturbereich von 50 bis 80°C bei hohen Katalysatoraktivitäten Polymere mit sehr hoher Molmasse, im Fall prochiraler Monomere sehr hoher Molmasse und sehr hoher Stereotaktizität erzeugen. Außerdem kann bei der Metallocensynthese auf eine aufwendige Isomerentrennung verzichtet werden.

Das erfindungsgemäße Metallocen zeichnet sich insbesondere dadurch aus, daß im Fall der stereospezifischen Polymerisation prochiraler Olefine, beispielsweise von Propylen, Polymere mit hoher Stereoregularität und Molekulargewicht erhalten werden. Insbesondere im Fall der isospezifischen Polymerisation von Propylen erhält man isotaktisches Polypropylen mit hohen isotaktischen Sequenzlängen und hohem Schmelzpunkt.

Weist das erfindungsgemäße Metallocen verschiedenartige Zentralatome auf, gelangt man zu Polyolefinen mit breiter, bi- oder polymodaler Molmassenverteilung.

Darüber hinaus können mit dem erfindungsgemäßen Metallocen Reaktorbeläge vermieden werden, ohne daß dafür eine Trägerung vorgenommen werden müßte.

Außerdem eignet sich das erfindungsgemäße Metallocen zur Herstellung von ethylenhaltigen Copolymeren wie Kautschuken oder Elastomeren mit hohem Comonomeranteil und besonders regelmäßigem Comonomereinbau.

Die nachfolgenden Beispiele sollen die Erfindung näher erläutern.

Alle Glasgeräte wurden im Vakuum ausgeheizt und mit Argon gespült. Alle Operationen wurden unter Ausschluß von Feuchtigkeit und Sauerstoff in Schlenkgefäßen durchgeführt. Die verwendeten Lösemittel wurden unter Argon jeweils frisch über Na/K-Legierung destilliert und in Schlenk-Gefäßen aufbewahrt.

Die Ermittlung des Al/CH₃-Verhältnisses im Aluminoxan erfolgte durch Zersetzung der Probe mit H₂SO₄ und Bestimmung des Volumens der entstehenden Hydrolysegase unter Normalbedingungen sowie durch komplexometrische Titration des Aluminiums in der dann gelösten Probe nach Schwarzenbach.

Toluol lösliches Methylaluminoxan wurde für die Beispiele zur Suspensionspolymerisation und zur Massepolymerisation mit ungeträgertem Metallocen als 10 Gew.-%ige Toluol-Lösung eingesetzt und enthielt gemäß Aluminium-Bestimmung 36 mg Al/cm³. Der mittlere Oligomerisationsgrad gemäß Gefrierpunktserniedrigung in Benzol betrug n = 20. Für das Toluol lösliche Methylaluminoxan wurde ein Verhältnis Al : CH₃ = 1 : 1,55 ermittelt.

Es bedeuten:
- VZ =: Viskositätszahl in cm³/g
- M_{w} =: Molmassengewichtsmittel in g/mol (ermittelt durch Gelpermeationschromatographie)
- M_{w}/Mₙ =: Molmassendispersität
- Schmp.=: Schmelzpunkt in °C (ermittelt mit DSC, 20°C/min Aufheiz-/Abkühlgeschwindigkeit)
- II =: Isotaktischer Index (II = mm + 1/2 mr, ermittelt durch ¹³C-NMR-Spektroskopie)
- MFI 230/5: Schmelzindex, gemessen nach DIN 53735; in dg/min
- SD =: Polymerschüttdichte in g/dm³.

Synthese der in den Polymerisationsbeispielen verwendeten Metallocene (die eingesetzten Edukte sind kommerziell erhältlich):

### A. 1,6-{Bis[methylsilyl-bis(2-methyl-4-phenyl-indenyl)zirkoniumdichlorid]} hexan (1)

Zu einer Lösung von 20 g (97 mmol) 2-Methyl-7-phenyl-inden in 200 ml O₂- und H₂O-freiem Toluol und 10 ml sauerstoff- und wasserfreiem THF unter einer Argon-Atmosphäre wurden bei Raumtemperatur 36,1 ml (97 mmol) einer 20 %igen Lösung von Butyllithium in Toluol im Verlauf von 30 Minuten zugetropft. Nach vollständiger Zugabe wurde noch 2 Stunden auf 80°C erhitzt. Anschließend wurden bei 0 bis 5°C 7,6 g (24,3 mmol) 1,6-Bis(methyldichlorosilyl)hexan in 10 ml Toluol innerhalb von 30 Minuten zugetropft und 1,5 Stunden bei Raumtemperatur nachgerührt. Zur Aufarbeitung wurden 100 ml Wasser zugegeben, die Phasen getrennt und die organische Phase vom Lösemittel befreit. Nach Filtration über 200 g Kieselgel (Hexan/CH₂Cl₂ 5:1) wurden 11,7 g (48 %) des Ligandsystems als zähflüssiges Öl erhalten.

Zu einer Lösung von 11,7 g (12 mmol) Ligand in 150 ml sauerstoff- und wasserfreiem Diethylether wurden unter einer Argon-Atmosphäre bei Raumtemperatur 22 ml (59 mmol) einer 20 %igen Lösung von Butyllithium in Toluol im Verlauf von 30 Minuten zugetropft. Nach vollständiger Zugabe wurde noch 2 Stunden zum Rückfluß erhitzt, das Lösemittel im Vakuum entfernt und der Rückstand mit Hexan über ein G3-Schlenkfritte filtriert. Das Tetralithiumsalz wurde mehrere Stunden im Vakuum einer Ölpumpe bei Raumtemperatur getrocknet und anschließend bei -78°C zu einer Suspension von 5,5 g (24 mmol) Zirkontetrachlorid in 200 ml sauerstoff- und wasserfreiem CH₂Cl₂ gegeben. Das Kältebad wurde entfernt und 1 Stunde bei Raumtemperatur nachgerührt. Das Reaktionsgemisch wurde über eine G3-Schlenkfritte filtriert, das Filtrat im Vakuum vom Lösemittel befreit und der Rückstand mehrmals mit Hexan gewaschen. Anschließend wurde aus Toluol bei -30°C umkristallisiert. Es wurden 7,3 g (47 %) 1 als Isomerengemisch in Form eines gelben amorphen Feststoffs erhalten.
¹H-NMR (100 MHz), CDCl₃): 6,8 bis 7,8 (m, 36 H, arom. H und β-H-Inden); 2,1 und 2,3 (2 m, 12 H, CH₃-Inden); 1,2 bis 2,0 (m, 18 H, 4CH₂, CH₂Si und CH₃Si). Massenspektrum: 1306 M⁺, korrektes Zerfallsmuster.

### B. 1,2-{Bis[methylsilyl-bis(2-methyl-4-phenyl-indenyl)zirkoniumdichlorid]} ethan (2)

Zu einer Lösung von 20 g (97 mmol) 2-Methyl-7-phenyl-inden in 200 ml sauerstoff- und wasserfreiem Toluol und 10 ml O₂- und H₂O-freiem THF unter einer Argon-Atmosphäre wurden bei Raumtemperatur 36,1 ml (97 mmol) einer 20 %igen Lösung von Butyllithium in Toluol im Verlauf von 30 Minuten zugetropft. Nach vollständiger Zugabe wurde noch 2 Stunden auf 80°C erhitzt. Anschließend wurden bei 0 bis 5°C 6,2 g (24,2 mmol) 1,2-Bis(methyldichlorosilyl)ethan in 10 ml Toluol innerhalb von 30 Minuten zugetropft und 1,5 Stunden bei Raumtemperatur nachgerührt. Zur Aufarbeitung wurden 100 ml Wasser zugegeben, die Phasen getrennt und die organische Phase vom Lösemittel befreit. Nach Filtration über 200 g Kieselgel (Hexan/CH₂Cl₂ 5:1) wurden 11,8 g (52 %) des Ligandsystems als zähflüssiges Öl erhalten.

Zu einer Lösung von 10,8 g (11 mmol) Ligand in 150 ml sauerstoff- und wasserfreiem Diethylether wurden unter einer Argon-Atmosphäre bei Raumtemperatur 21,5 ml (57,6 mmol) einer 20 %igen Lösung von Butyllithium in Toluol im Verlauf von 30 Minuten zugetropft. Nach vollständiger Zugabe wurde noch 2 Stunden zum Rückfluß erhitzt, das Lösemittel im Vakuum entfernt und der Rückstand mit Hexan über ein G3-Schlenkfritte filtriert. Das Tetralithiumsalz wurde mehrere Stunden im Vakuum einer Ölpumpe bei Raumtemperatur getrocknet und anschließend bei -78°C zu einer Suspension von 5,4 g (23 mmol) Zirkontetrachlorid in 200 ml sauerstoff- und wasserfreiem CH₂Cl₂ gegeben. Das Kältebad wurde entfernt und 1 Stunde bei Raumtemperatur nachgerührt. Das Reaktionsgemisch wurde über eine G3-Schlenkfritte filtriert, das Filtrat im Vakuum vom Lösemittel befreit und der Rückstand mehrmals mit Hexan gewaschen. Anschließend wurde aus Toluol bei -30°C umkristallisiert. Es wurden 5,6 g (39 %) 2 als Isomerengemisch in Form eines gelben amorphen Feststoffs erhalten.
¹H-NMR (100 MHz), CDCl₃): 6,9 bis 7,8 (m, 36 H, arom. H und β-H-Inden); 2,3 und 2,5 (2 m, 12 H, CH₃-Inden); 1,2 bis 1,7 (m, 10 H, CH₂Si und CH₃Si). Massenspektrum: 1250 M⁺, korrektes Zerfallsmuster.

### C. 1,6-{Bis[methylsilyl-(2-methylindenyl)(2-methyl-4-phenyl-indenyl)zirkoniumdichlorid]} hexan (3)

Zu einer Lösung von 15 g (73 mmol) 2-Methyl-7-phenyl-inden in 150 ml Toluol und 10 ml THF unter wurden bei Raumtemperatur 27 ml (73 mmol) einer 20 %igen Lösung von Butyllithium in Toluol im Verlauf von 30 Minuten zugetropft. Nach vollständiger Zugabe wurde noch 2 Stunden auf 80°C erhitzt. Anschließend wurden bei 0 bis 5°C 11,2 g (36 mmol) 1,6-Bis(methyldichlorosilyl)hexan in 10 ml Toluol innerhalb von 2 Minuten zugetropft und 1,5 Stunden bei Raumtemperatur nachgerührt. Die Lösemittel wurden entfernt und der Rückstand in Toluol aufgenommen und anschließend ausgefallenes LiCl abfiltriert. Zu dem Filtrat wurde bei Raumtemperatur eine Suspension von 2-Methyl-indenyl-lithium (hergestellt durch Umsetzung von 9,5 g (73 mmol) 2-Methylinden in 100 ml Toluol und 20 ml THF bei Raumtemperatur mit 27 ml (73 mmol) einer 20 %igen Lösung von Butyllithium in Toluol und 1 Stunde nachrühren bei 50°C) innerhalb von 30 Minuten zugetropft und anschließend noch 2 Stunden bei Raumtemperatur weitergerührt. Die Reaktionsmischung wurde mit 100 ml Wasser versetzt, die Phasen getrennt und die organische Phase mit 50 ml Wasser gewaschen. Die Lösemittel wurden im Vakuum entfernt und der Rückstand durch Chromatographie an 500 g Kieselgel (Hexan/Methylenchlorid 1:1) gereinigt. Es wurden 7,3 g (24 %) des unsymmetrischen Ligandsystems von Verbindung 3 als sehr zähflüssiges Öl erhalten.

Zu einer Lösung von 7,1 g (8,4 mmol) das Ligandsystems von Verbindung 3 in 50 ml Diethylether wurden bei Raumtemperatur 15 ml (40 mmol) einer 20 %igen Lösung von Butyllithium in Toluol im Verlauf von 30 Minuten zugetropft. Nach vollständiger Zugabe wurde noch 2 Stunden zum Rückfluß erhitzt, das Lösemittel im Vakuum entfernt und der Rückstand mit Hexan über ein G3-Schlenkfritte filtriert. Das Tetralithiumsalz wurde mehrere Stunden im Vakuum einer Ölpumpe bei Raumtemperatur getrocknet und anschließend bei -78°C zu einer Suspension von 3,7 g (16 mmol) Zirkontetrachlorid in 50 ml O₂- und H₂O-freiem CH₂Cl₂ gegeben. Das Kältebad wurde entfernt und 1 Stunde bei Raumtemperatur nachgerührt. Das Reaktionsgemisch wurde über eine G3-Schlenkfritte filtriert, der Rückstand mit insgesamt 200 ml Methylenchlorid nachextrahiert und die vereinigten Filtrate im Vakuum weitgehend vom Lösemittel befreit. Der Rückstand wurde mehrmals mit Hexan/Methylenchlorid 1:1 gewaschen und anschließend getrocknet. Es wurden 4,2 g (43 %) von Verbindung 3 als gelber amorpher Feststoff erhalten.
¹H-NMR (100 MHz, CDCl₃): 6,7 bis 8,0 (m, 28 H, arom. H und β-IndH); 2,1 und 2,3 (2 m, 12 H, CH₃-Inden); 1,2 - 2,0 (m, 18 H, 4CH₂, CH₂Si und CH₃Si).

### D. 1,2-{Bis[methylsilyl-(indenyl)(2-methyl-4-phenyl-indenyl)zirkoniumdichlorid]}ethan (4)

Zu einer Lösung von 15 g (73 mmol) 2-Methyl-7-phenyl-inden in 150 ml Toluol und 8 ml THF wurden bei Raumtemperatur 27 ml (73 mmol) einer 20 %igen Lösung von Butyllithium in Toluol im Verlauf von 30 Minuten zugetropft. Nach vollständiger Zugabe wurde noch 2 Stunden auf 80°C erhitzt. Anschließend wurden bei 0 bis 5°C 11,2 g (36 mmol) 1,2-Bis(methyldichlorosilyl)ethan in 10 ml Toluol innerhalb von 2 Minuten zugetropft und 1,5 Stunden bei Raumtemperatur nachgerührt. Die Lösemittel wurden entfernt und der Rückstand in Toluol aufgenommen und anschließend ausgefallenes LiCl abfiltriert. Zu dem Filtrat wurde bei Raumtemperatur eine Suspension von Indenyl-lithium (hergestellt durch Umsetzung von 8,5 g (73 mmol) Inden in 100 ml Toluol und 20 ml THF bei Raumtemperatur mit 27 ml (73 mmol) einer 20 %igen Lösung von Butyllithium in Toluol und 1 Stunde nachrühren bei 50°C) innerhalb von 30 Minuten zugetropft und anschließend noch 2 Stunden bei Raumtemperatur weitergerührt. Die Reaktionsmischung wurde mit 100 ml Wasser versetzt, die Phasen getrennt und die organische Phase mit 50 ml Wasser gewaschen. Die Lösemittel wurden im Vakuum entfernt und der Rückstand durch Chromatographie an 500 g Kieselgel (Hexan/Methylenchlorid 1:1) gereinigt. Es wurden 9,3 (31 %) des unsymmetrischen Ligandsystems von Verbindung 4 als sehr zähflüssiges Öl erhalten.

Zu einer Lösung von 9,1 g (11 mmol) des Ligandsystems von Verbindung 4 in 150 ml Diethylether wurden bei Raumtemperatur 17 ml (46 mmol) einer 20 %igen Lösung von Butyllithium in Toluol im Verlauf von 30 Minuten zugetropft. Nach vollständiger Zugabe wurde noch 2 Stunden zum Rückfluß erhitzt, das Lösemittel im Vakuum entfernt und der Rückstand mit Hexan über ein G3-Schlenkfritte filtriert. Das Tetralithiumsalz wurde mehrere Stunden im Vakuum einer Ölpumpe bei Raumtemperatur getrocknet und anschließend bei -78°C zu einer Suspension von 4,9 g (21 mmol) Zirkontetrachlorid in 200 ml CH₂Cl₂ gegeben. Das Kältebad wurde entfernt und 1 Stunde bei Raumtemperatur nachgerührt. Das Reaktionsgemisch wurde über eine G3-Schlenkfritte filtriert, der Rückstand mit insgesamt 400 ml Methylenchlorid nachextrahiert und die vereinigten Filtrate im Vakuum weitgehend vom Lösemittel befreit. Der Rückstand wurde mehrmals mit je 10 ml Methylenchlorid gewaschen und anschließend getrocknet. Es wurden 4,3 g (34 %) von Verbindung 4 als gelber amorpher Feststoff erhalten.
¹H-NMR (100 MHz, CDCl₃): 6,9 - 7,8 (m, 28 H, arom. H und β-IndH); 6,3 (m, 2H, α-IndH), 2,4 (m, 6 H, CH₃-Inden); 1,2 - 2,0 (m, 18 H, 4CH₂, CH₂Si und CH₃Si).

### E. 1,6-{Bis[methylsilyl-(2,3,5-trimethyl-cyclopentadienyl)(2-methyl-4-phenyl-indenyl)-zirkoniumdichlorid]}hexan (5)

Zu einer Lösung von 15 g (73 mmol) 2-Methyl-7-phenyl-inden in 150 ml Toluol und 8 ml THF wurden bei Raumtemperatur 27 ml (73 mmol) einer 20 %igen Lösung von Butyllithium in Toluol im Verlauf von 30 Minuten zugetropft. Nach vollständiger Zugabe wurde noch 2 Stunden auf 80°C erhitzt. Anschließend wurden bei 0 bis 5°C 11,2 g (36 mmol) 1,6-Bis(methyldichlorosilyl)hexan in 10 ml Toluol innerhalb von 2 Minuten zugetropft und 1,5 Stunden bei Raumtemperatur nachgerührt. Die Lösemittel wurden entfernt und der Rückstand in Toluol aufgenommen und anschließend ausgefallenes LiCl abfiltriert. Zu dem Filtrat wurde bei Raumtemperatur eine Suspension von 1,2,4-Trimethylcyclopentadienyllithium (hergestellt durch Umsetzung von 7,9 g (73 mmol) 1,2,4-Trimethylcyclopentadien in 100 ml Toluol und 20 ml THF bei Raumtemperatur mit 27 ml (73 mmol) einer 20 %igen Lösung von Butyllithium in Toluol und 1 Stunde nachrühren bei Raumtemperatur) innerhalb von 30 Minuten zugetropft und anschließend noch 2 Stunden bei Raumtemperatur weitergerührt. Die Reaktionsmischung wurde mit 100 ml Wasser versetzt, die Phasen getrennt und die organische Phase mit 50 ml Wasser gewaschen. Die Lösemittel wurden im Vakuum entfernt und der Rückstand durch Chromatographie an 700 g Kieselgel (Hexan/AcOEt 5:1) gereinigt. Es wurden 13,5 g (47 %) des Ligandsystems von Verbindung 5 als sehr zähflüssiges Öl erhalten.

Zu einer Lösung von 13 g (16,5 mmol) des Ligandsystems von Verbindung 5 in 150 ml Diethylether wurden bei Raumtemperatur 26 ml (70 mmol) einer 20 %igen Lösung von Butyllithium in Toluol im Verlauf von 30 Minuten zugetropft. Nach vollständiger Zugabe wurde noch 2 Stunden zum Rückfluß erhitzt, das Lösemittel im Vakuum entfernt und der Rückstand mit Hexan über ein G3-Schlenkfritte filtriert. Das Tetralithiumsalz wurde mehrere Stunden im Vakuum einer Ölpumpe bei Raumtemperatur getrocknet und anschließend bei -78°C zu einer Suspension von 7,5 g (32 mmol) Zirkoniumtetrachlorid in 150 ml CH₂Cl₂ gegeben. Das Kältebad wurde entfernt und 1 Stunde bei Raumtemperatur nachgerührt. Das Reaktionsgemisch wurde über eine G3-Schlenkfritte filtriert, der Rückstand mit insgesamt 100 ml Methylenchlorid nachextrahiert und die vereinigten Filtrate im Vakuum weitgehend vom Lösemittel befreit. Der Rückstand wurde mehrmals mit Hexan gewaschen und anschließend getrocknet. Es wurden 6,1 g (36 %) von Verbindung 5 als gelber amorpher Feststoff erhalten.
¹H-NMR (100 MHz, CDCl₃): 6,9 bis 8,0 (m, 18 H, arom. H und β-IndH), 6,4 (s, 1H, H-Cp), 1,9 bis 2,2 (m, 24 H, CH₃-Ind und -Cp), 1,2 bis 2,0 (m, 18H, 4CH₂, CH₂Si und CH₃Si).

### F. 1,6-{Bis[methylsilyl-(3-isopropyl-cyclopentadienyl) (fluorenyl)zirkoniumdichlorid]}hexan (6)

Zu einer Lösung von 10 g (60 mmol) Fluoren in 100 ml Toluol und 10 ml Diethylether wurden bei Raumtemperatur 22 ml (60 mmol) einer 22 %igen Lösung von Butyllithium in Toluol im Verlauf von 30 Minuten zugetropft. Nach vollständiger Zugabe wurde noch 2 Stunden auf 80°C erhitzt. Anschließend wurden bei 0 bis 5°C 7,8 g (30 mmol) 1,6-Bis(methyldichlorosilyl)hexan in 10 ml Toluol innerhalb von 2 Minuten zugetropft und 1 Stunde bei Raumtemperatur nachgerührt. Die Lösemittel wurden entfernt und der Rückstand in Toluol aufgenommen und anschließend ausgefallenes LiCl abfiltriert. Zu dem Filtrat wurde bei Raumtemperatur eine Suspension von Isopropylcyclopentadienyllithium (hergestellt durch Umsetzung von 6,5 g (60 mmol) Isopropylcyclopentadien in 100 ml Toluol und 10 ml Diethylether bei Raumtemperatur mit 22 ml (60 mmol) einer 20 %igen Lösung von Butyllithium in Toluol und 1 Stunde nachrühren bei Raumtemperatur) innerhalb von 30 Minuten zugetropft und anschließend noch 2 Stunden bei Raumtemperatur weitergerührt. Die Reaktionsmischung wurde mit 100 ml Wasser versetzt, die Phasen getrennt und die organische Phase mit 50 ml Wasser gewaschen. Die Lösemittel wurden im Vakuum entfernt und der Rückstand durch Chromatographie an 700 g Kieselgel (Hexan/Methylenchlorid 10:1) gereinigt. Es wurden 13,3 (63 %) des Ligandsystems von Verbindung 6 als sehr zähflüssiges Öl erhalten.
Zu einer Lösung von 13 g (18 mmol) des Ligandsystems von Verbindung 6 in 150 ml Diethylether wurden bei Raumtemperatur 30 ml (80 mmol) einer 20 %igen Lösung von Butyllithium in Toluol im Verlauf von 30 Minuten zugetropft. Nach vollständiger Zugabe wurde noch 2 Stunden zum Rückfluß erhitzt, das Lösemittel im Vakuum entfernt und der Rückstand mit Hexan über ein G3-Schlenkfritte filtriert. Das Tetralithiumsalz wurde mehrere Stunden im Vakuum einer Ölpumpe bei Raumtemperatur getrocknet und anschließend bei -78°C zu einer Suspension von 8,15 g (35 mmol) Zirkoniumtetrachlorid in 150 ml Methylenchlorid gegeben. Das Kältebad wurde entfernt und 1 Stunde bei Raumtemperatur nachgerührt. Das Reaktionsgemisch wurde über eine G3-Schlenkfritte filtriert, der Rückstand mit insgesamt 300 ml Methylenchlorid nachextrahiert und die vereinigten Filtrate im Vakuum auf ca. 1/3 ihres Volumens eingeengt. Bei -20°C kristallisierten daraus 4,6 g (27 %) von Verbindung 6 als gelber amorpher Feststoff.
¹H-NMR (100 MHz, CDCl₃): 7,1 bis 8,2 (m, 16 H, arom. H), 5,5, 5,7, 6,3 (3m, 6H, H-Cp), 2,9 (m, 2H, i-Propyl), 1,0 bis 2,0 (m, 30 H, 4CH₂, CH₂Si, CH₂Si und CH₃-i-Propyl).

### G. 1,6-{Bis[methylsilyldiindenyl)zirkoniumdichlorid]}hexan (7)

20 g (172 mmol) Inden, 64,2 ml (172 mmol) Butyllithium (20 %ig in Toluol) und 12,8 g (42 mmol) 1,6-Bis(methyldichlorosilyl)hexan wurden analog Beispiel A umgesetzt. Nach Filtration über 250 g Kieselgel (Hexan/Methylenchlorid 5:1) wurden 14,1 g (53 %) des Ligandsystems als zähflüssiges Öl erhalten. 14,0 g (22 mmol) Ligandsystem, 37,3 ml (100 mmol) Butyllithium (20 %ig in Toluol) und 10,1 g (44 mmol) Zirkoniumtetrachlorid wurden analog der Komplexsynthese in Beispiel A umgesetzt. Aus Toluol fielen bei -30°C 9,0 g (43 %) 3 als gelbes amorphes Isomerengemisch aus.
¹H-NMR (100 MHz, CDCl₃): 6,8 bis 7,6 (m, 20 H, arom. H und β-H-Inden); 6,0 bis 6,2 (m, 4H, α-H-Inden); 1,2 bis 2,0 (m, 12 H, 4 CH₂ und 2 CH₂Si); 0,9 bis 1,3 (3 s, breit, 6 H, Si-CH₃). Massenspektrum: 951 M⁺, korrektes Zerfallsmuster.

### H. 1,6-{Bis[methylsilyl-bis(2-methyl-4,5-benzoindenyl)zirkoniumdichlorid]}hexan (8)

Entsprechend Beispiel A wurden aus 57,8 g (320 mmol) 2-Methyl-4,5-benzoinden, 119 ml (320 mmol) Butyllithium (20 %ig in Toluol) und 25 g (80 mmol) 1,6-Bis(methyldichlorosilyl)- hexan nach wäßriger Aufarbeitung und Chromatographie 30,2 g (43 %) des Ligandsystems als zähflüssiges Öl erhalten. 29,6 g (33 mmol) 1,6-{Bis[methylsilyl-bis(2-methyl-4,5-benzoinden)]}hexan wurden entsprechend Beispiel A mit 50 ml (134 mmol) Butyllithium (20 %ig in Toluol und 13,3 g (57 mmol) Zirkoniumtetrachlorid umgesetzt. Nach Abfiltration des Lithiumchlorids und Umkristallisation des Rohproduktes erhält man 12,4 g (35%) als Isomerengemisch.
¹H-NMR (100 MHz, CDCl₃): 8,0 - 6,9 (m, 28 H, arom. H und β-H-Inden); 2,3 - 2,2 (je m, 12 H, Me-Inden); 1,6 - 1,2 (m, 18 H, 6 CH₂ und 2 CH₃Si). Massenspektrum: 1207 M⁺, korrektes Zerfallsmuster.

### I. 1,2-{Bis[methylsilyl-bis(2-methyl-4,5-benzoindenyl)zirkoniumdichlorid]}ethan (9)

Entsprechend Beispiel A wurden aus 72,7 g (403 mmol) 2-Methyl-4,5-benzoinden, 150 ml (403 mmol) Butyllithium (20 %ig in Toluol) und 23,5 g (92 mmol) 1,2-Bis(methyldichlorosilyl)- ethan nach wäßriger Aufarbeitung und Chromatographie 29,8 g (39 %) des Ligandsystems als zähflüssiges Öl erhalten. 15,7 g (19 mmol) 1,2-{Bis[methysilyl-bis(2-methyl-4,5-benzoinden)]}ethan wurden entsprechend Beispiel B mit 30 ml (80 mmol) Butyllithium (20 %ig in Toluol und 8,8 g (38 mmol) Zirkoniumtetrachlorid umgesetzt. Nach Abfiltration von Lithiumchlorid und Umkristallisation des Rohproduktes erhält man 13,5 g (62%) als Isomerengemisch.
¹H-NMR (100 MHz, CDCl₃): 8,0 - 6,9 (m, 28 H, arom. H und β-H-Inden); 2,3 - 2,2 (je m, 12 H, Me-Inden); 1,4 - 1,2 (m, 10 H, 2 CH₂ und 2 SiCH₃). Massenspektrum: 1151 M⁺, korrektes Zerfallsmuster.

### Polymerisationsbeispiele:

### Beispiel 1

Ein trockener 16-dm³-Reaktor wurde zunächst mit Stickstoff und anschließend mit Propylen gespült und mit 10 dm³ flüssigem Propylen gefüllt. Dann wurden 30 cm³ toluolische Methylaluminoxanlösung zugegeben und der Ansatz bei 30°C gerührt. Paralell dazu wurden 3,4 mg des Metallocens 1 in 20 cm³ toluolische Methylaluminoxanlösung (23 mmol Al) gelöst und durch 15 minütiges Stehenlassen zur Reaktion gebracht. Die Lösung wurde dann in den Reaktor gegeben, durch Wärmezufuhr auf die Polymerisationstemperatur von 50°C aufgeheizt (4°C/min) und das Polymerisationssystem durch Kühlung 1 Stunde bei 50°C gehalten. Durch Zusatz von 20 ml Isopropanol wurde die Polymerisation gestoppt, das überschüssige Monomer abgegast und das Polymer im Vakuum getrocknet. Es wurden 0,17 kg Polypropylen erhalten.

Die Katalysatoraktivität betrug 50 kgPP/g Metallocen * h. VZ = 1041 cm³/g; Schmp. = 154°C; der mit Heptan extrahierbare Anteil beträgt 1,3 %; Mw/Mn = 6,4.

### Beispiel 2

Die Polymerisation aus Beispiel 1 wurde wiederholt, mit dem Unterschied, daß 4,3 mg des Metallocens 1 verwendet wurden und die Polymerisationstemperatur 60°C betrug. Es wurden 0,45 kg Polypropylen erhalten.

Die Katalysatoraktivität betrug 105 kgPP/g Metallocen * h. VZ = 764 cm³/g; Schmp. = 154°C; der mit Heptan extrahierbare Anteil beträgt 1,9 %; Mw/Mn = 2,9.

### Beispiel 3

Die Polymerisation aus Beispiel 1 wurde wiederholt, mit dem Unterschied, daß 4,4 mg des Metallocens 1 verwendet wurden und die Polymerisationstemperatur 70°C betrug. Es wurden 1,08 kg Polypropylen erhalten. Der Reaktor zeigt nur sehr dünne Beläge an Innenwand und Rührer.

Die Katalysatoraktivität betrug 245 kgPP/g Metallocen * h. VZ = 518 cm³/g; Schmp. = 153°C; der mit Heptan extrahierbare Anteil beträgt 2,4 %; Mw/Mn = 2,7.

### Beispiel 4

Die Polymerisation aus Beispiel 1 wurde wiederholt, mit dem Unterschied, daß 2,7 mg des Metallocens 2 verwendet wurden. Es wurden 0,17 kg Polypropylen erhalten.

Die Katalysatoraktivität betrug 31 kgPP/g Metallocen * h. VZ = 845 cm³/g; Schmp. = 154°C; Mw/Mn = 3,7; der mit Heptan extrahierbare Anteil beträgt 7,7 %.

### Beispiel 5

Die Polymerisation aus Beispiel 1 wurde wiederholt, mit dem Unterschied, daß 4,3 mg des Metallocens 2 verwendet wurden und die Polymerisationstemperatur 60°C betrug. Es wurden 0,71 kg Polypropylen erhalten.

Die Katalysatoraktivität betrug 74 kgPP/g Metallocen * h. VZ = 564 cm³/g; Schmp. = 153°C; Mw/Mn = 3,0; der mit Heptan extrahierbare Anteil beträgt 4,6 %.

### Beispiel 6

Die Polymerisation aus Beispiel 1 wurde wiederholt, mit dem Unterschied, daß 3,8 mg des Metallocens 2 verwendet wurden und die Polymerisationstemperatur 70°C betrug. Es wurden 0,95 kg Polypropylen erhalten. Der Reaktor zeigt nur sehr dünne Beläge an Innenwand und Rührer.

Die Katalysatoraktivität betrug 125 kgPP/g Metallocen * h. VZ = 392 cm³/g; Schmp. = 153°C; Mw/Mn = 2,6; der mit Heptan extrahierbare Anteil beträgt 4,1 %.

### Beispiel 7

Ein trockener 24 dm³-Reaktor wurde mit Propylen gespült und mit 12 dm³ flüssigem Propylen befüllt. Dann wurden 30 cm³ toluolische Methylaluminoxanlösung (40 mmol Al) zugegeben und der Ansatz bei 30°C 5 Minuten gerührt.

Parallel dazu wurden 2,0 mg von Verbindung 3 in 15 cm³ toluolischer Methylaluminoxanlösung (20 mmol Al) gelöst und durch 5 minütiges Stehenlassen zur Reaktion gebracht. Die Lösung wurde dann in den Reaktor gegeben, durch Wärmezufuhr auf die Polymerisationstemperatur von 70°C aufgeheizt (7°C/min) und das Polymerisationssystem 1 Stunde durch Kühlung bei 70°C gehalten. Gestoppt wurde die Polymerisation durch Zusatz von 10 Ndm³ CO₂-Gas. Das überschüssige Monomer wurde abgegast, das Polymer im Vakuum getrocknet. Man erhielt 0,51 kg Polypropylen.

Die Katalysatoraktivität betrug 255 kg (PP)/g (Metallocen) x h.
VZ = 365 cm³/g; Schmp. = 154°C;
II = 97,5 %; MFI (230/5) = 2,8 dg/min;
M_{w} = 517599 g/mol, M_{w}/Mₙ = 2,4.

### Beispiel 8

Es wurde verfahren wie in Beispiel 7, die Polymerisationstemperatur war jedoch 50°C. Die Katalysatoraktivität war 134 kg (PP)/g (Metallocen) x h.
VZ = 517 cm³/g; Schmp. = 159°C;
II = 98,4 %; MFI (230/5) = 0,9 dg/min;
M_{w} = 786500 g/mol, M_{w}/Mₙ = 2,4.

### Beispiel 9

Es wurde verfahren wie in Beispiel 7, das verwendete Metallocen war jedoch Verbindung 4.
Die Katalysatoraktivität war 402 kg (PP)/g (Metallocen) x h.
VZ = 142 cm³/g; Schmp. = 152°C;
II = 96,9 %; MFI (230/5) = 86 dg/min;
M_{w} = 153500 g/mol, M_{w}/Mₙ = 2,0.

### Beispiel 10

Es wurde verfahren wie in Beispiel 9, die Polymerisationstemperatur war jedoch 50°C. Die Katalysatoraktivität war 176 kg (PP)/g (Metallocen) x h.
VZ = 237 cm³/g; Schmp. = 155°C;
II = 97,9 %; MFI (230/5) = 20 dg/min;
M_{w} = 301500 g/mol, M_{w}/Mₙ = 2,7.

### Beispiel 11

Es wurde verfahren wie in Beispiel 7, das verwendete Metallocen war jedoch Verbindung 4 und die Polymerisationstemperatur war 50°C.
Die Katalysatoraktivität war 101 kg (PP)/g (Metallocen) x h.
VZ = 476 cm³/g; Schmp. = 157°C;
II = 98 %; MFI (230/5) = 1,8 dg/min;
M_{w} = 698500 g/mol, M_{w}/Mₙ = 5,8.

### Beispiel 12

Ein trockener 24 dm³-Reaktor wurde mit Propylen gespült und mit 12 Ndm³ Wasserstoff und 12 dm³ flüssigem Propylen befüllt. Dann wurden 30 cm³ toluolische Methylaluminoxanlösung (entsprechend 40 mmol Al) zugegeben.

Parallel dazu wurden 2,5 mg von Verbindung 3 in 15 cm³ toluolischer Methylaluminoxanlösung (20 mmol Al) gelöst und durch 5 minütiges Stehenlassen voraktiviert.
Die Lösung wurde dann in den Reaktor gegeben und unter Zugabe von 60 g Ethylen wurden 2 Stunden bei 60°C polymerisiert. Die Metallocenaktivität betrug 205 kg Copolymer/g Metallocen x h. Der Ethylengehalt des Copolymeren betrug 5,4 Gew.-%.
VZ = 339 cm³/g, M_{w} = 384 000 g/mol, M_{w}/Mₙ = 2,0, Smp. = 136°C, laut NMR-Spektroskopie wurde das Ethylen überwiegend isoliert (statistisches Copolymer) eingebaut.

### Beispiel 13

Ein trockener 150 dm³-Reaktor wurde mit Stickstoff gespült und bei 20°C mit 80 dm³ eines entaromatisierten Benzinschnittes mit dem Siedebereich 100 bis 120°C gefüllt. Dann wurde der Gasraum durch 5-maliges Aufdrücken von 2 bar Propylen und Entspannen stickstofffrei gespült.

Nach Zugabe von 50 l flüssigem Propylen wurden 75 cm³ toluolische Methylaluminoxanlösung (entsprechend 100 mmol Al) zugegeben und der Reaktorinhalt auf 50°C aufgeheizt. Durch Zudosierung von Wasserstoff wurde ein Wasserstoffgehalt im Gasraum des Reaktors von 2,0 % eingestellt und später dann durch Nachdosierung während der gesamten Propylencopolymerisationszeit konstant gehalten (Überprüfung on-Line durch Gaschromatographie). 16,0 mg von Verbindung 3 wurden in 37,5 ml toluolischer Methylaluminoxanlösung (entsprechend 50 mmol Al) gelöst und nach 15 Minuten in den Reaktor gegeben.

Durch Kühlung wurde der Reaktor 11 Stunden bei 50°C Polymerisationstemperatur gehalten. Nach Abgasen von Wasserstoff und Propylen bis auf einen Propylendruck im Reaktor von 1.0 bar wurden nach Zugabe von 2.5 kg Ethylen weitere 5 Stunden bei 50°C polymerisiert. Dann wurde durch Zugabe von 2 bar CO₂-Gas die Polymerisation gestoppt und das gebildete Polymere auf einer Drucknutsche vom Suspensionsmedium abgetrennt. Die Trocknung des Produktes erfolgte 24 Stunden bei 80°C/200 mbar. Es wurden 17,5 kg Blockcopolymerpulver, entsprechend einer Metallocenaktivität von 68 kg Copolymer/g Metallocen x h erhalten.
VZ = 209 cm³/g; M_{w} = 217 500 g/mol; M_{w}/Mₙ = 2,3; Smp. = 156°C; MFI (230/5) = 12 dg/min. Das Blockcopolymer enthielt 12,2 Gew.-% Ethylen. Die Fraktionierung ergab einen Gehalt von 28,4 Gew.-% Ethylen/Propylen-Kautschuk. Die Glastemperatur des Kautschuks war -52°C.

### Beispiel 14

Beispiel 7 wurde wiederholt, zusätzlich wurden jedoch vor Zugabe des Propylens 2,5 Ndm³ Wasserstoff in den Reaktor dosiert.
Die Metallocenaktivität war 589 kg PP/g Metallocen x h.
VZ = 139 cm³/g; M_{w} = 149 500 g/mol, M_{w}/Mₙ = 1,9; Smp. = 158°C.

### Beispiel 15

Ein trockener 16-dm³-Reaktor wurde zunächst mit Stickstoff und anschließend mit Propylen gespült und mit 10 dm³ flüssigem Propylen gefüllt. Dann wurden 30 cm³ toluolische Methylaluminoxanlösung zugegeben und der Ansatz bei 30°C gerührt. Paralell dazu wurden 3,0 mg 5 in 20 cm³ einer toluolischen Methylaluminoxanlösung (23 mmol Al) gelöst und durch 15 minütiges Stehenlassen zur Reaktion gebracht. Die Lösung wurde dann in den Reaktor gegeben, durch Wärmezufuhr auf die Polymerisationstemperatur von 50°C aufgeheizt (4°C/min) und das Polymerisationssystem durch Kühlung 1 Stunde bei 50°C gehalten. Durch Zusatz von 20 ml Isopropanol wurde die Polymerisation gestoppt, das überschüssige Monomer abgegast und das Polymer im Vakuum getrocknet. Es wurden 0,56 kg Polypropylen erhalten. Der Reaktor zeigte im wesentlichen keine Beläge an Innenwand und Rührer.

Die Katalysatoraktivität betrug 189 kg(PP)/g (Metallocen) * h; VZ = 449 cm³/g; Schmp. = 158°C; M_{w} = 529500 g/mol; M_{w}/Mₙ = 2,2.

### Beispiel 16

Die Polymerisation aus Beispiel 1 wurde wiederholt mit dem Unterschied, daß 5,6 mg Verbindung 6 verwendet wurde und die Polymerisationstemperatur 70°C betrug. Es wurden 0,17 kg kautschukartiges Polypropylen erhalten. Der Reaktor zeigte im wesentlichen keine Beläge an Innenwand und Rührer.

Die Katalysatoraktivität betrug 30 kg(PP)/g (Metallocen) * h; VZ = 80 cm³/g; isotaktische Pentaden (¹³C-NMR) = 58 % mmmm.

### Beispiele 17 - 22

Beispiel 12 wurde mit höheren Mengen Comonomer wiederholt. Die Ergebnisse sind der Tabelle 1 zu entnehmen (statistische Copolymere und Copolymerkautschuke).

### Beispiele 23 - 32

### Herstellung von Copolymerkautschuken und Terpolymerkautschuken.

Ein trockener 1,5 dm³-Reaktor wurde mit Stickstoff gespült und bei 20°C mit 0,75 dm³ eines entaromatisierten Benzinschnitts (Exxsol DSP 100/120) gefüllt. Dann wurde der Gasraum des Reaktors durch 5maliges Aufdrücken von 2 bar Ethylen stickstofffrei gespült.

Danach wurden 2,6 cm³ toluolische Methylaluminoxanlösung (3,5 mmol Al, p = 20) zugegeben. Unter Rühren wurde der Reaktor auf 30°C aufgeheizt (15 Minuten) und bei 500 Upm Rührgeschwindigkeit wurde durch Zugabe von Propylen und Ethylen das gewünschte Monomerverhältnis eingestellt (Partialdrücke von Propylen und Ethylen siehe Tabelle 2). Zur Herstellung von Terpolymeren wurde zusätzlich noch 5-Ethyliden-2-norbornen (Menge siehe Tabelle 2) als dritte Monomerkomponente vorgelegt.

Parallel dazu wurden 0,125 mg Metallocen 1 in 1,25 cm³ toluolischer Methylaluminoxanlösung (1,67 mmol Al, p = 20) aufgelöst und durch 5minütiges Stehenlassen zur vollständigen Reaktion gebracht. Dann wurde die Lösung in den Reaktor gegeben. Das Polymerisationssystem wurde auf 50°C gebracht und 1 Stunde bei dieser Temperatur gehalten. Durch Zugabe von 2 ml Isopropanol wurde die Reaktion gestoppt. Metallocenaktivitäten und Produkteigenschaften siehe Tabelle 2.

### Beispiele 33 - 35

Beispiel 3 wurde wiederholt, verwendet wurden jedoch die Metallocene 7 (Beisp. 33), 8 (Beisp. 34) und 9 (Beisp. 35). Die Ergebnisse der Polymerisationen sind in Tabelle 3 zusammengefaßt.

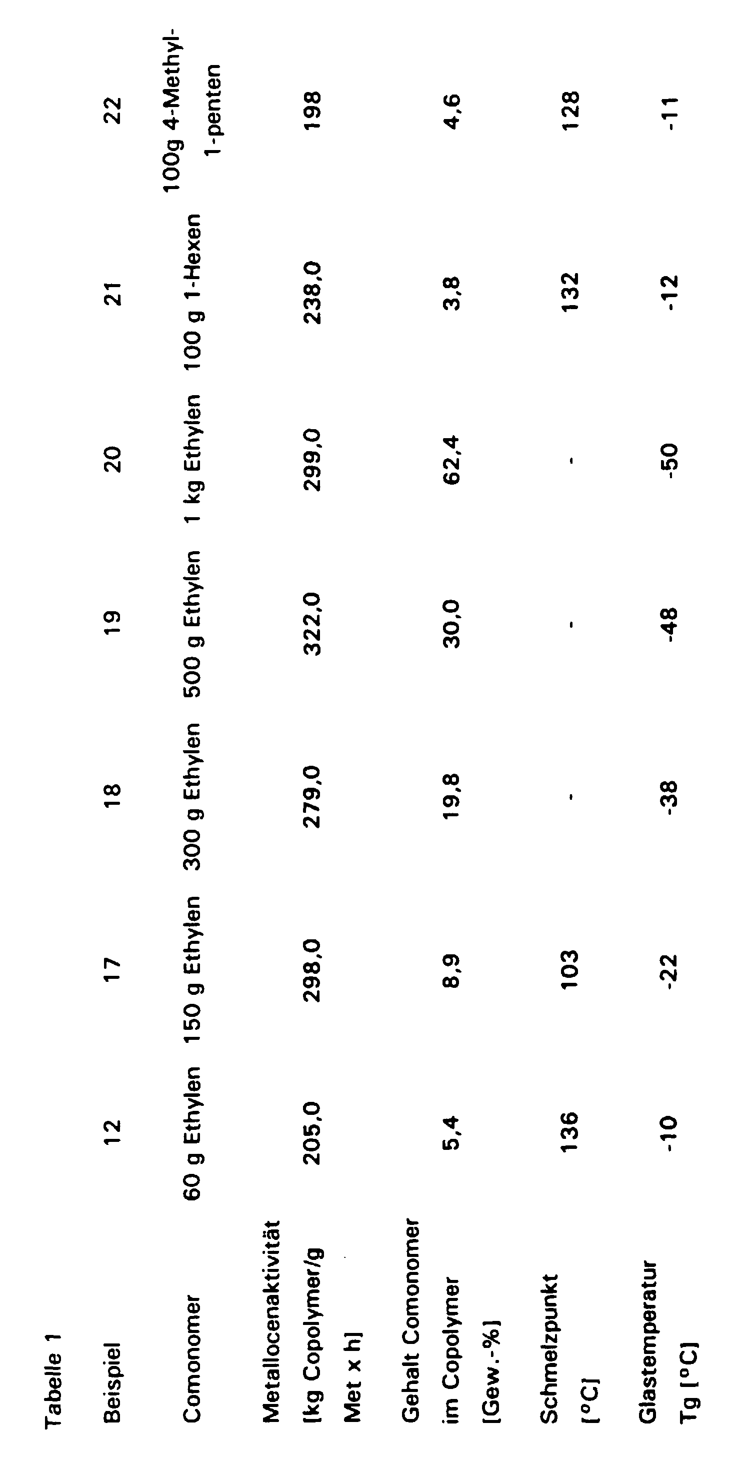

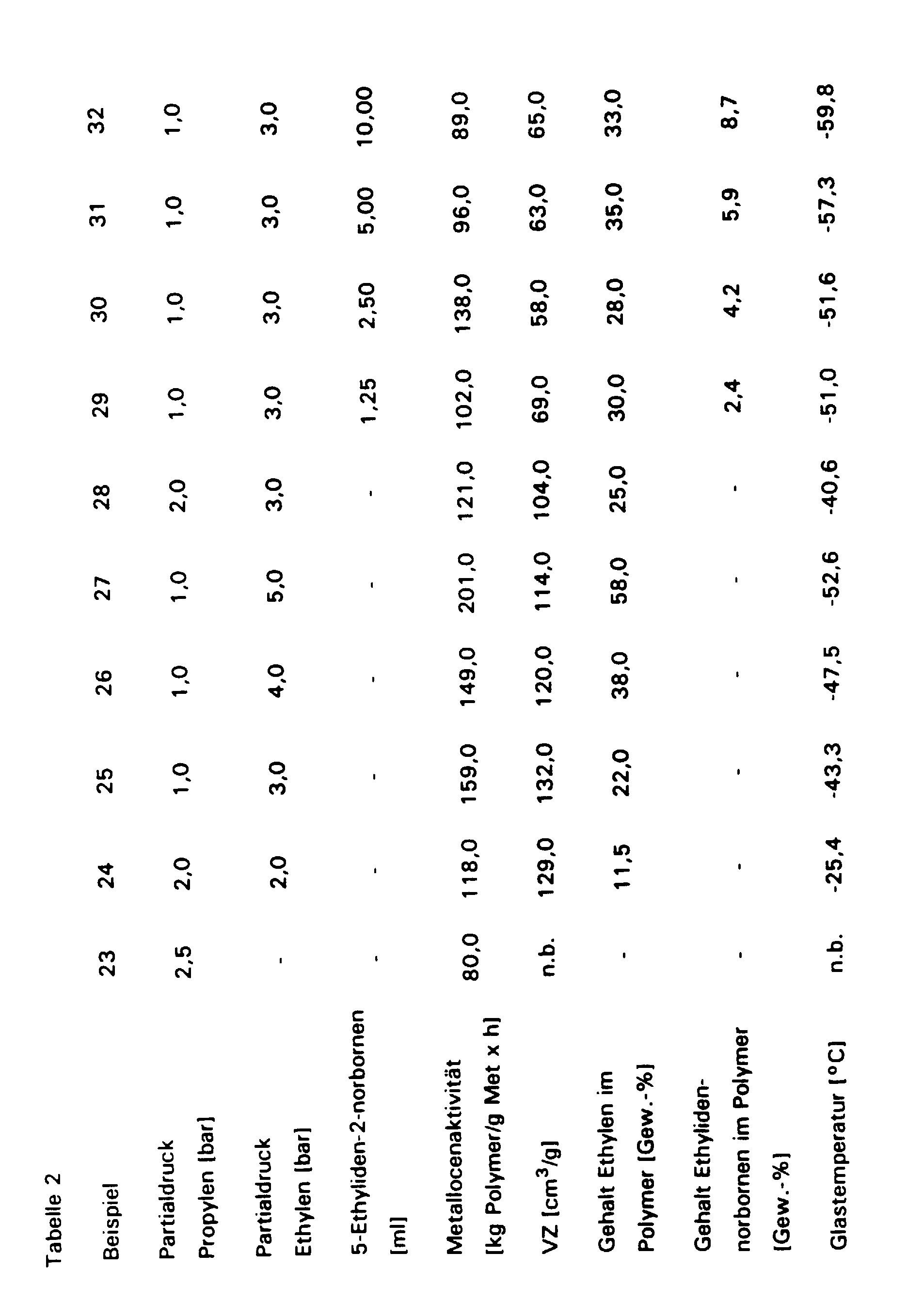

**Tabelle 3**

| Beispiel | 33 | 34 | 35 |
|---|---|---|---|
| Metallocenaktivität [kgPP/gMet x h] | 296,0 | 219,0 | 196,0 |
| VZ [cm³/g] | 54,0 | 294,0 | 269,0 |
| Schmp. [°C] | 141,0 | 145,0 | 148,0 |
| M_{w}/Mₙ | 2,3 | 2,5 | 2,1 |

### Beispiel 36

Verwendung eines geträgerten Metallocens:
a) Herstellung des geträgerten Cokatalysators
   Herstellung des geträgerten Cokatalysators erfolgte wie in EP 578 838 beschrieben in der folgenden Weise in einem Edelstahl-Reaktor in explosionsgeschützten Ausführungen mit einem Umpumpsystem der Druckstufe 60 bar, mit Inertgasversorgung, Temperierung durch Mantelkühlung und zweitem Kühlkreislauf über einem Wärmetauscher am Umpumpsystem. Das Umpumpsystem saugte den Reaktorinhalt über einen Anschluß im Reaktorboden mit einer Pumpe an, drückte ihn in einen Mischer und durch eine Steigleitung über einen Wärmetauscher in den Reaktor zurück. Der Mischer war so geschaltet, daß sich in dem Zulauf ein verengter Rohrquerschnitt befand, wo eine erhöhte Strömungsgeschwindigkeit entstand, und in dessen Turbulenzzone axial und entgegen der Strömungsrichtung eine dünne Zuleitung geführt war, durch welche - getaktet - jeweils eine definierte Menge Wasser unter 40 bar Argon eingespeist werden konnte. Die Kontrolle der Reaktion erfolgte über einen Probenehmer am Umpumpkreislauf.
   Im vorstehend beschriebenen Reaktor mit 16 dm³ Volumen wurden 5 dm³ Decan unter Inertbedingungen vorgelegt. 0,3 dm³ (= 3,1 mol) Trimethylaluminium wurden bei 25°C zugefügt. Danach wurden 250 g Kieselgel SD 3216-30 (Grace AG), welche vorher bei 120°C in einem Argonfließbett getrocknet wurden, durch einen Feststofftrichter in den Reaktor eindosiert und mit Hilfe des Rührers und des Umpumpsystems homogen verteilt. Eine Gesamtmenge von 45,9 g Wasser wurde in Portionen von 0,1 cm³ während 2 Stunden jeweils alle 15 Sekunden in den Reaktor gegeben. Der Druck, herrührend von Argon und den entwickelten Gasen, wurde durch Druckregelventile konstant bei 10 bar gehalten. Nachdem alles Wasser eingebracht worden war, wurde das Umpumpsystem abgeschaltet und das Rühren noch 5 Stunden bei 25°C fortgesetzt. Über eine Drucknutsche wurde das Lösungsmittel entfernt und der Cokatalysatorfeststoff mit Decan gewaschen. Dann wurde im Vakuum getrocknet. Das isolierte Feststoff enthält 18,7 Gew.-% Aluminium. 15 g dieses Feststoffes (104 mmol Al) wurden in einem rührbaren Gefäß in 100 cm³ Toluol suspendiert und auf -30°C abgekühlt. Gleichzeitig wurden 200 mg Metallocen 1 in 75 cm³ Toluol gelöst und innerhalb von 30 Minuten zur Suspension zugetropft. Es wurde langsam unter Rühren auf Raumtemperatur erwärmt, wobei die Suspension eine rote Farbe annahm. Anschließend wurde eine Stunde bei 70°C gerührt und nach dem Abkühlen auf Raumtemperatur wurde das Gemisch filtriert und der Feststoff 3mal mit je 100 cm³ Toluol und 1mal mit 100 cm³ Hexan gewaschen. Der verbleibende, hexanfeuchte Filterrückstand wurde im Vakuum getrocknet. Man erhält 14,7 g frei fließenden, hellroten, geträgerten Katalysator. Die Analyse ergab einen Gehalt von 12,7 mg Zirkonocen pro Gramm Katalysator.
b) Polymerisation
   1,0 g des unter a) hergestellten Katalysators wurden in 25 cm³ eines Benzinschnittes mit dem Siedebereich 100 - 120°C suspendiert (Exxsol DSP 100/120). Paralell dazu wurde ein trockener 24 dm³-Reaktor zunächst mit Stickstoff und anschließend mit Propylen gespült und mit 12 dm³ flüssigem Propylen und mit 1,3 dm³ Wasserstoff befüllt. Dann wurden 3 cm³ Triisobutylaluminium (12 mmol) in 30 ml Hexan verdünnt, in den Reaktor gegeben und der Ansatz bei 30°C 15 Minuten gerührt. Anschließend wurde die Katalysatorsuspension in den Reaktor gegeben, auf die Polymerisationstemperatur von 70°C aufgeheizt (10°C/min) und das Polymerisationssystem 1 Stunde durch Kühlung bei 70°C gehalten. Gestoppt wurde die Polymerisation durch Zusatz von 20 ml Isopropanol. Das überschüssige Monomer wurde abgegast und das Polymer im Vakuum getrocknet. Es resultierten 2,4 kg Polypropylen-Pulver.
   Die Fraktionierung des Polymers mittels Heptanextraktion ergab einen heptanlöslichen Anteil von 0,9 Gew.-% (VZ = 112 cm³/g) und einen unlöslichen Anteil von 99,1 Gew.-% (VZ = 469 cm³/g). Das so hergestellte Pulver enthielt keine Fines < 250 µm, der d₅₀-Wert beträgt 980 µm.

### Beispiel 37

0,125 mg Metallocen 1 wurden in 1,25 ml MAO-Lösung in Toluol gelöst und 15 Minuten gerührt. Parallel hierzu wird ein inertisierter 1.5 dm³ Rührreaktor mit 750 ml Dieselöl (Siedepunkt 100 - 120 °C) sowie 3,75 ml MAO-Lösung in Toluol befüllt und auf 70°C temperiert. Die Katalysator-Lösung wird zudosiert und bei 750 Upm mit 5 bar Ethylen 1 Stunde polymerisiert. Anschließend wird der Reaktor entspannt, das Polymere aus der Suspension abfiltriert, mit Aceton gewaschen und 12 Stunden im Vakuum-Trockenschrank getrocknet.
Es resultieren 31 g Polyethylen, entsprechend 248 kgPE/g Metallocen / h, mit einer VZ von 520 cm³/g. Die Polydispersität M_{w}/Mₙ beträgt 2,7.

### Beispiel 38

Beispiel 37 wurde mit 0,125 mg Metallocen 2 wiederholt. Es resultieren 40,8 g PE, entsprechend 326 kg PE/g Metallocen/h, mit einer VZ von 720 cm³/g. M_{w}/Mₙ = 2,8.

### Beispiel 39

Beispiel 1 wurde wiederholt, wobei zu Beginn zusätzlich 0,5 bar Wasserstoff zudosiert wurde. Es resultieren 35 g Polyethylen, mit einer VZ von 75 cm³/g. M_{w}/Mₙ = 2,8

### Beispiel 40

Beispiel 39 wurde wiederholt, wobei zu Beginn zusätzlich 1 bar Wasserstoff zudosiert wurde. Es resultieren 28 g Polyethylen-Wachs, mit einer VZ von 22 cm³/g. Die Schmelzviskosität bei 140°C beträgt 550 mPas. M_{w}/Mₙ = 2,6

### Beispiel 41

Beispiel 37 wurde mit 0,4 mg Metallocen 7 wiederholt. Es resultieren 25,1 g PE, entsprechend 62 kg PE/g Metallocen/h, mit einer VZ von 340 cm³l/g.
M_{w}/Mₙ = 2,8.

### Beispiel 42

Beispiel 37 wurde mit 0,125 mg Metallocen 8 wiederholt. Es resultieren 24 g PE, entsprechend 192 kg PE/g Metallocen/h, mit einer VZ von 440 cm³/g. M_{w}/Mₙ = 2,8.

### Beispiel 43

Beispiel 37 wurde mit 0,125 mg Metallocen 9 wiederholt. Es resultieren 30 g PE, entsprechend 240 kg PE/g Metallocen/h, mit einer VZ von 495 cm³/g. M_{w}/Mₙ = 2,7.

### Beispiel 44

Beispiel 43 wurde wiederholt, wobei zusätzlich 20 ml 1-Hexen zusammen mit dem Dieselöl vorgelegt und die Reaktion nach 15 min durch Aufpressen von CO₂ gestoppt wurde. Es resultierten 9 g eines Ethylen/1-Hexen Copolymers, entsprechend 288 kg PE/g Metallocen/h, mit einer VZ von 250 cm³/g. Das ¹³C-NMR zeigt 8,96 mol% Hexen.

## Patentansprüche

1. Mehrkernige Metallocen-Verbindung der Formel I 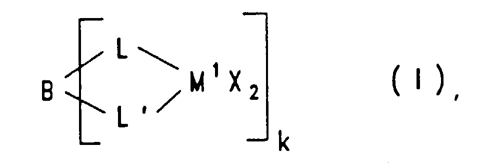 worin
M¹ gleich oder verschieden sind und ein Metall der Gruppe IVb, Vb oder Vlb des Periodensystems sind,
X gleich oder verschieden sind und Wasserstoff, eine C₁-C₁₀-Alkyl-, eine C₁-C₁₀-Alkoxy-, eine C₆-C₁₀-Aryl-, eine C₆-C₁₀-Aryloxy-, eine C₂-C₁₀-Alkenyl-, eine C₇-C₄₀-Arylalkyl-, eine C₇-C₄₀-Alkylaryl-, eine C₈-C₄₀-Arylalkenyl-, eine OH-Gruppe, ein Halogenatom oder Pseudohalogen bedeuten,
L und L' gleich oder verschieden sind und einen π-Liganden oder O, S, PR⁴ oder NR⁴, worin R⁴ für ein Wasserstoffatom oder einen C₁-C₃₀-Kohlenwasserstoffrest wie C₁-C₂₀-Alkyl oder C₆-C₁₄Aryl steht, bedeuten,
k gleich 2 ist, wenn B 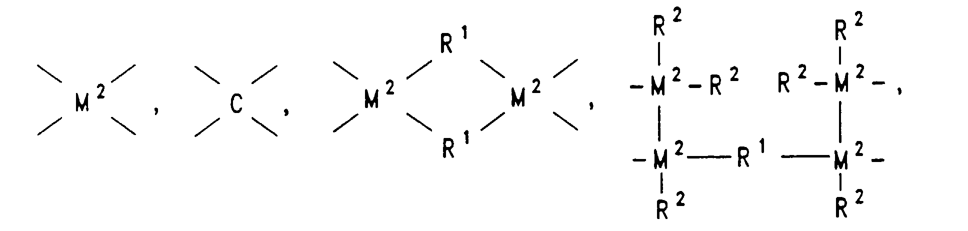 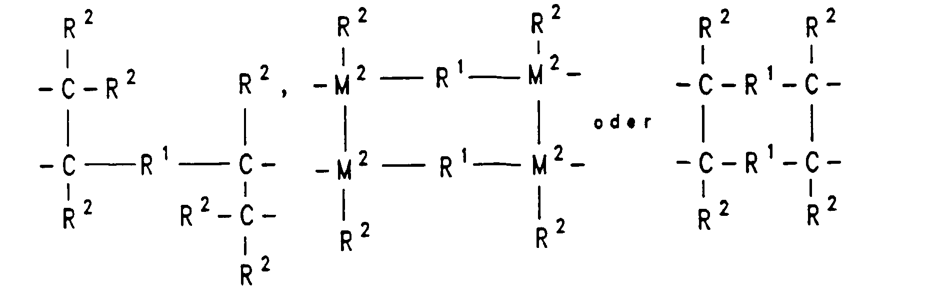
ist, und k eine ganze Zahl ≥ 2 ist, wenn B 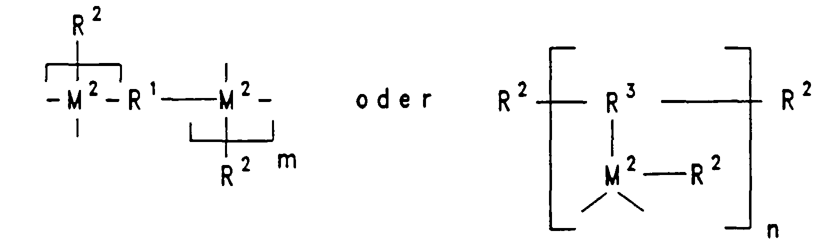 ist, wobei
R¹ gleich oder verschieden sind und eine zweibindige kohlenwasserstoffhaltige Verbrückung bedeuten,
die Reste R² gleich oder verschieden sind und ein Wasserstoffatom, ein Halogenatom oder einen kohlenwasserstoffhaltiger Rest,
R³ ein dreibindiger kohlenwasserstoffhaltiger Rest ist, und n gleich k und n gleich k-1 ist und
M² Silizium, Germanium oder Zinn ist.

2. Mehrkernige Metallocen-Verbindung der Formel II 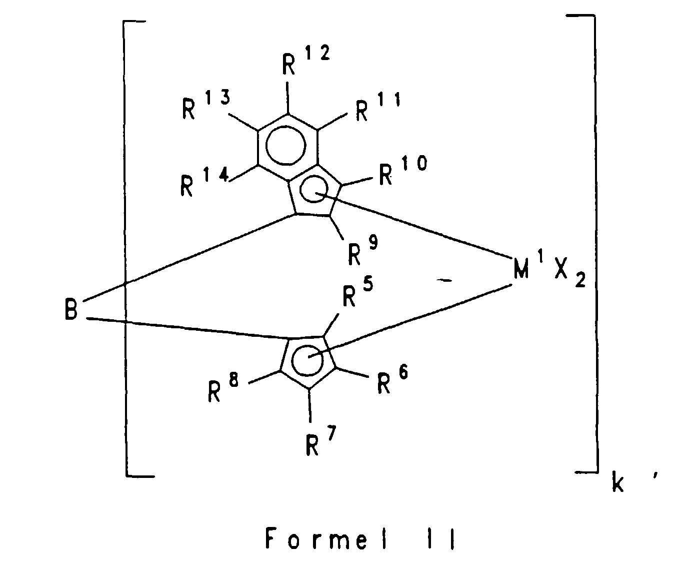 worin
M¹ gleich oder verschieden sind und ein Metall der Gruppe IVb, Vb oder VIb des Periodensystems sind,
X gleich oder verschieden sind und Wasserstoff, eine C₁-C₁₀-Alkyl-, eine C₁-C₁₀-Alkoxy-, eine C₆-C₁₀-Aryl-, eine C₆-C₁₀-Aryloxy-, eine C₂-C₁₀-Alkenyl-, eine C₇-C₄₀-Arylalkyl-, eine C₇-C₄₀-Alkylaryl-, eine C₈-C₄₀-Arylalkenyl-, eine OH-Gruppe, ein Halogenatom oder Pseudohalogen bedeuten,
die Reste R⁵, R⁶, R⁷ und R⁸ gleich oder verschieden sind und ein Wasserstoffatom, ein Halogenatom, eine C₁-C₁₀-Alkylgruppe, die halogeniert sein kann, eine C₆-C₂₀-Aryl-, C₇-C₄₀-Arylalkyl-, eine C₇-C₄₀-Alkylaryl-, eine C₂-C₁₀-Alkenyl-, C₈-C₄₀-Arylalkenylgruppe, einen -NR¹⁵₂-, -SR¹⁵-, -OSiR¹⁵₃-, -SiR¹⁵₃- oder -PR¹⁵₂-Rest bedeuten, worin R¹⁵ gleich oder verschieden ist und eine C₁-C₁₀-Alkylgruppe oder eine C₆-C₁₀-Arylgruppe ist, oder zwei oder mehr benachbarte Reste R⁵, R⁶, R⁷ und R⁸ zusammen mit den sie verbindenden Atomen ein Ringsystem bilden,
R⁹ bis R¹⁴ gleich oder verschieden sind und ein Wasserstoffatom, ein Halogenatom, eine C₁-C₁₀-Alkylgruppe, die halogeniert sein kann, eine C₆-C₂₀-Aryl-, C₇-C₄₀-Arylalkyl-, eine C₇-C₄₀-Alkylaryl-, eine C₂-C₁₀-Alkenyl-, C₈-C₄₀-Arylalkenylgruppe, einen -NR¹⁵₂-, -SR¹⁵-, -OSiR¹⁵₃-, -SiR¹⁵₃- oder -PR¹⁵₂-Rest bedeuten, worin R¹⁵ gleich oder verschieden ist und eine C₁-C₁₀-Alkylgruppe oder eine C₆-C₁₀-Arylgruppe ist, oder zwei oder mehr benachbarte Reste R⁹, R¹⁰, R¹¹, R¹², R¹³ und R¹⁴ zusammen mit den sie verbindenden Atomen ein Ringsystem bilden,
k gleich 2 ist, wenn B 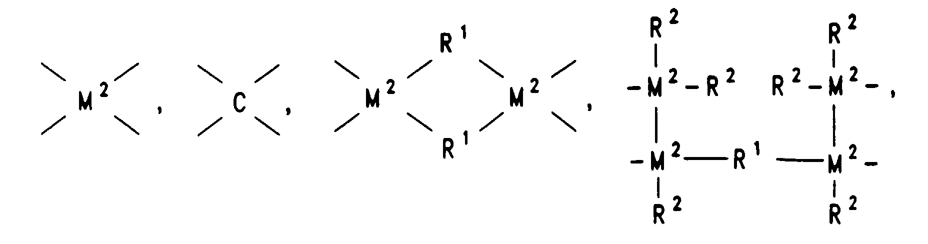 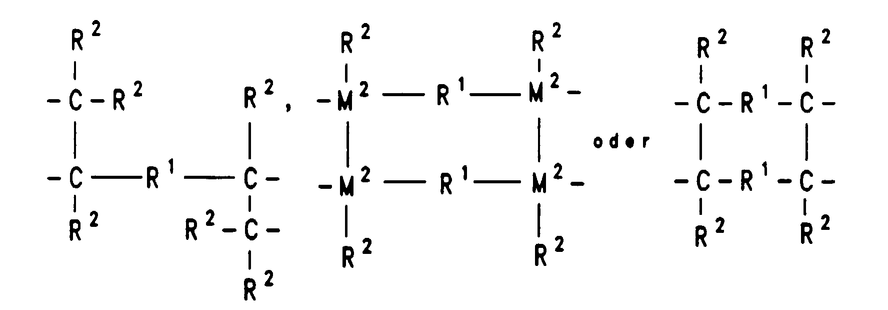
ist, und k eine ganze Zahl ≥ 2 ist, wenn B 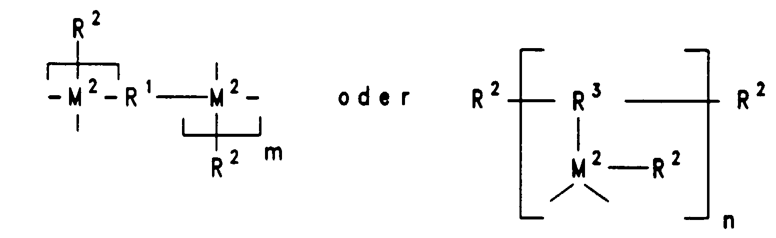 ist, wobei
R¹ gleich oder verschieden sind und eine zweibindige kohlenwasserstoffhaltige C₁-C₄₀-Verbrückung bedeuten,
die Reste R² gleich oder verschieden sind und ein Wasserstoffatom, ein Halogenatom oder einen kohlenwasserstoffhaltigen C₁-C₄₀-Rest bedeuten,
R³ ein dreibindiger kohlenwasserstoffhaltiger C₁-C₄₀-Rest ist, und n gleich k und m gleich k-1 ist und
M² Silizium, Germanium oder Zinn ist.

3. Mehrkernige Metallocen-Verbindung gemäß Anspruch 2, dadurch gekennzeichnet, daß M¹ gleich oder verschieden Zirkonium oder Hafnium sind, die Reste X gleich sind und eine C₁-C₄-Alkylgruppe, eine C₇-C₁₀-Alkylarylgruppe oder ein Halogenatom bedeuten,
R⁵ bis R⁸ gleich oder verschieden sind und ein Wasserstoffatom, eine C₁-C₁₀-Alkylgruppe, eine C₆-C₂₀-Arylgruppe oder einen SiR¹⁵₃-Rest, worin R¹⁵ eine C₁-C₁₀-Alkylgruppe ist, bedeuten, oder die Reste R⁵ und R⁶ und/oder R⁷ und R⁸ zusammen mit den sie verbindenden Atomen ein aromatisches oder aliphatisches Ringsystem bilden,
R⁹ bis R¹⁴ gleich oder verschieden sind und ein Wasserstoffatom, eine C₁-C₁₀-Alkylgruppe oder eine C₆-C₂₀-Arylgruppe bedeuten, oder
R⁹ und R¹⁰ und/oder zwei oder mehr benachbarte Reste R¹¹, R¹², R¹³ und R¹⁴ zusammen mit den sie verbindenden Atomen, ein aromatisches oder aliphatisches Ringsystem bilden,
k gleich 2 ist,
B 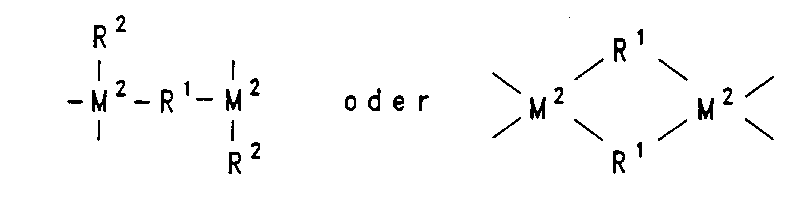 ist, wobei M² Silizium ist,
R¹ gleich oder verschieden sind und eine zweibindige lineare oder verzweigte C₁-C₆-Alkylgruppe, insbesondere 1,2-Ethandiyl, 1,3-Propandiyl, 1,4-Butandiyl, 1,6-Hexandiyl, bedeuten und
die Reste R² gleich oder verschieden sind und Wasserstoff, eine C₁-C₄-Alkylgruppe oder eine C₆-C₁₀-Arylgruppe bedeuten.

4. Katalysatorsystem, enthaltend mindestens eine mehrkernige Metallocen-Verbindung gemäß einem oder mehreren der Ansprüche 1-3 und mindestens einen Cokatalysator.

5. Katalysatorsystem, enthaltend mindestens eine mehrkernige Metallocen-Verbindung gemäß einem oder mehreren der Ansprüche 1-3 und mindestens einen Cokatalysator, welches geträgert und/oder vorpolymerisiert ist.

6. Verfahren zur Herstellung einer mehrkernigen Metallocen-Verbindung gemäß Anspruch 1, dadurch gekennzeichnet, daß Verbindungen LH und L'H mit einer Base deprotoniert wird und mit einem Reagenz A2 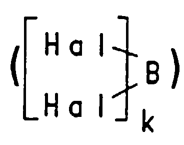 zu einer Verbindung der Formel A3 oder einem ihrer Isomeren umgesetzt werden 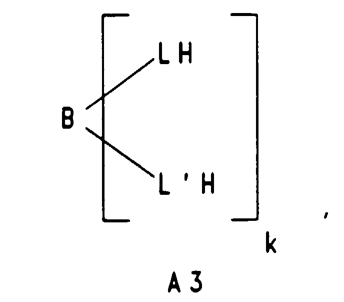 welche anschließend mit 2 k Äquivalenten einer Base deprotoniert wird und mit k Äquivalenten eines Metalltetrahalogenids zur Verbindung A4 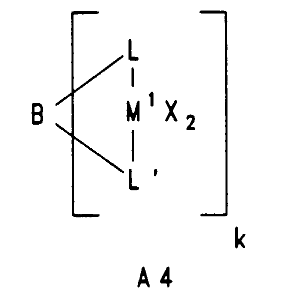 umgesetzt wird, die gegebenenfalls mit einem Derivatisierungsreagenz zu einer Verbindung der Formel I mit X ungleich Halogen umgesetzt werden kann.

7. Verfahren zur Herstellung eines Olefinpolymers durch Polymerisation mindestens eines Olefins, in Gegenwart eines Katalysators, welcher mindestens ein mehrkerniges Metallocen und mindestens einen Cokatalysator enthält, dadurch gekennzeichnet, daß das mehrkernige Metallocen eine Verbindung der Formel I ist 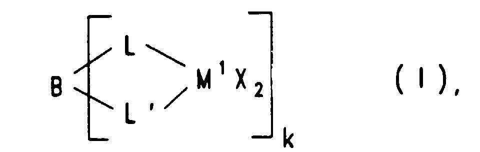 worin
M¹ gleich oder verschieden sind und ein Metall der Gruppe IVb, Vb oder Vlb des Periodensystems sind,
X gleich oder verschieden sind und Wasserstoff, eine C₁-C₁₀-Alkyl-, eine C₁-C₁₀-Alkoxy-, eine C₆-C₁₀-Aryl-, eine C₆-C₁₀-Aryloxy-, eine C₂-C₁₀-Alkenyl-, eine C₇-C₄₀-Arylalkyl-, eine C₇-C₄₀-Alkylaryl-, eine C₈-C₄₀-Arylalkenyl-, eine OH-Gruppe, ein Halogenatom oder Pseudohalogen bedeuten,
L und L' gleich oder verschieden sind und einen π-Liganden oder O, S, PR⁴ oder NR⁴, worin R⁴ für ein Wasserstoffatom oder einen C₁-C₃₀-Kohlenwasserstoffrest wie C₁-C₂₀-Alkyl oder C₆-C₁₄Aryl steht, bedeuten,
k gleich 2 ist, wenn B 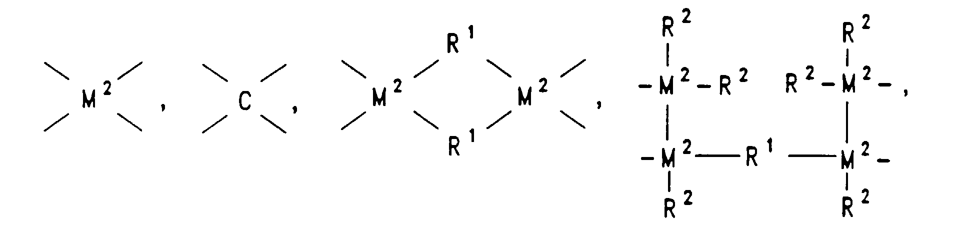 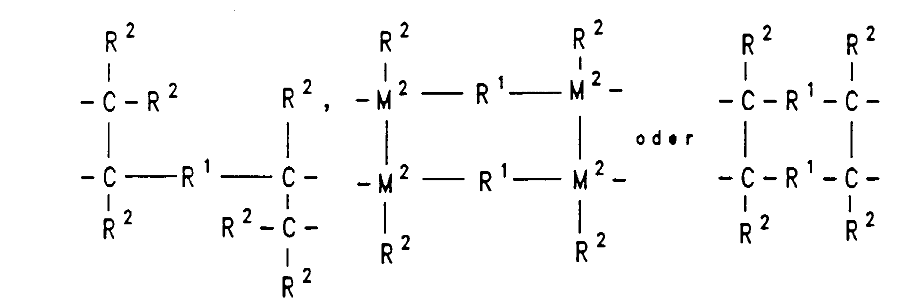 ist, und k eine ganze Zahl ≥ 2 ist, wenn B 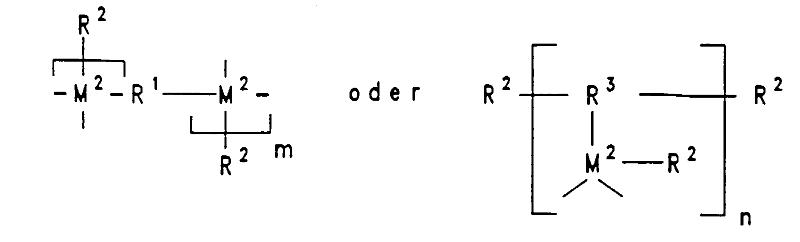
ist, wobei
R¹ gleich oder verschieden sind und eine zweibindige kohlenwasserstoffhaltige Verbrückung bedeuten,
die Reste R² gleich oder verschieden sind und ein Wasserstoffatom, ein Halogenatom oder einen kohlenwasserstoffhaltiger Rest,
R³ ein dreibindiger kohlenwasserstoffhaltiger Rest ist, und n gleich k und m gleich k-1 ist und
M² Silizium, Germanium oder Zinn ist.

8. Formteil, enthaltend mindestens ein Olefinpolymer, hergestellt nach dem Verfahren gemäß Anspruch 7.

9. Verwendung einer mehrkernigen Metallocen-Verbindung, gemäß einem oder mehreren der Ansprüche 1-3, zur Olefinpolymerisation.

## Claims

1. A polynuclear metallocene compound of the formula I 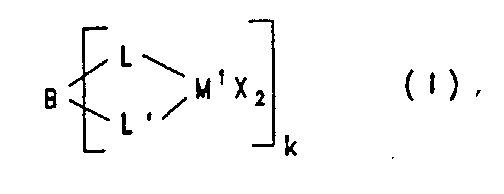 where
M¹ are identical or different and are a metal of group IVb, Vb or VIb of the Periodic Table,
X are identical or different and are hydrogen, a C₁-C₁₀-alkyl group, a C₁-C₁₀-alkoxy group, a C₆-C₁₀-aryl group, a C₆-C₁₀-aryloxy group, a C₂-C₁₀-alkenyl group, a C₇-C₄₀-arylalkyl group, a C₇-C₄₀-alkylaryl group, a C₈-C₄₀-aryl-alkenyl group, an OH group, a halogen atom or pseudohalogen,
L and L' are identical or different and are a Π ligand or O, S, PR⁴ or NR⁴, in which R⁴ is a hydrogen atom or a C₁-C₃₀ hydrocarbon radical such as C₁-C₂₀-alkyl or C₆-C₁₄-aryl,
k is 2 if B is 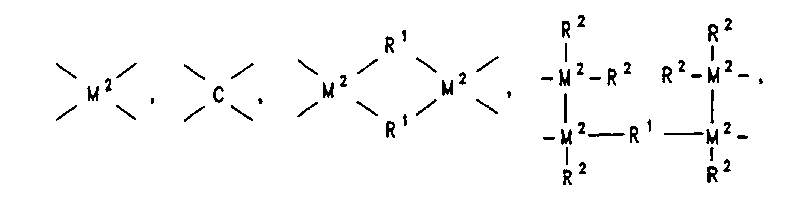 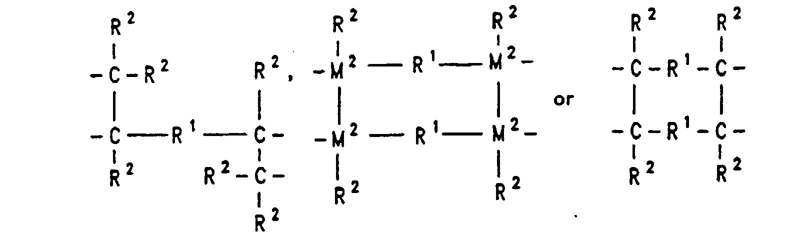
and k is an integer ≥ 2 if B is 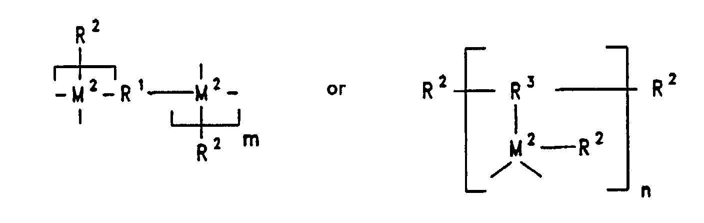 where
R¹ are identical or different and are a divalent hydrocarbon-containing bridge structure, the radicals R² are identical or different and are a hydrogen atom, a halogen atom or a hydrocarbon-containing radical,
R³ is a trivalent hydrocarbon-containing radical, and n is k and m is k-1 and
M² is silicon, germanium or tin.

2. A polynuclear metallocene compound of the formula II 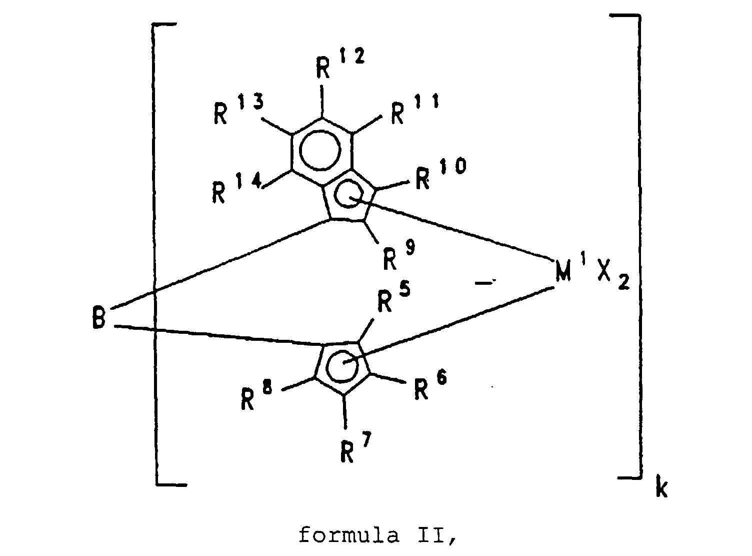 where
M¹ are identical or different and are a metal of group IVb, Vb or VIb of the Periodic Table,
X are identical or different and are hydrogen, a C₁-C₁₀-alkyl group, a C₁-C₁₀-alkoxy group, a C₆-C₁₀-aryl group, a C₆-C₁₀-aryloxy group, a C₂-C₁₀-alkenyl group, a C₇-C₄₀-arylalkyl group, a C₇-C₄₀-alkylaryl group, a C₈-C₄₀-aryl-alkenyl group, an OH group, a halogen atom or pseudo-halogen,
the radicals R⁵, R⁶, R⁷ and R⁸ are identical or different and are a hydrogen atom, a halogen atom, a C₁-C₁₀-alkyl group which can be halogenated, a C₆-C₂₀-aryl group, a C₇-C₄₀-arylalkyl group, a C₇-C₄₀-alkylaryl group, a C₂-C₁₀-alkenyl group, a C₈-C₄₀-arylalkenyl group, a -NR¹⁵₂, -SR¹⁵, -OSiR¹⁵₃, -SiR¹⁵₃ or -PR¹⁵₂ radical, where R¹⁵ is identical or different and is a C₁-C₁₀-alkyl group or a C₆-C₁₀-aryl group, or two or more adjacent radicals R⁵, R⁶, R⁷ and R⁸ together with the atoms connecting them form a ring system,
R⁹ to R¹⁴ are identical or different and are a hydrogen atom, a halogen atom, a C₁-C₁₀-alkyl group which can be halogenated, a C₆-C₂₀-aryl group, a C₇-C₄₀-arylalkyl group, a C₇-C₄₀-alkylaryl group, a C₂-C₁₀-alkenyl group, a C₈-C₄₀-arylalkenyl group, a -NR¹⁵₂, -SR¹⁵, -OSiR¹⁵₃, -SiR¹⁵₃ or -PR¹⁵₂ radical, where R¹⁵ is identical or different and is a C₁-C₁₀-alkyl group or a C₆-C₁₀-aryl group, or two or more adjacent radicals R⁹, R¹⁰, R¹¹, R¹², R¹³ and R¹⁴ together with the atoms connecting them form a ring system, k is 2, if B is 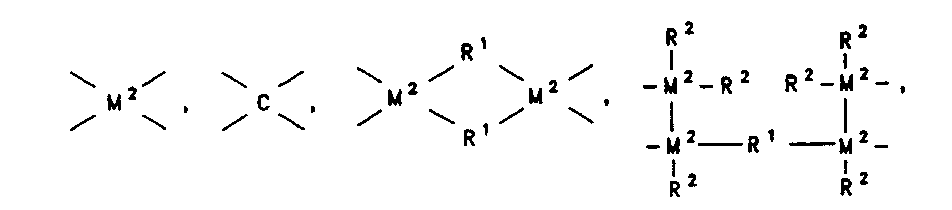 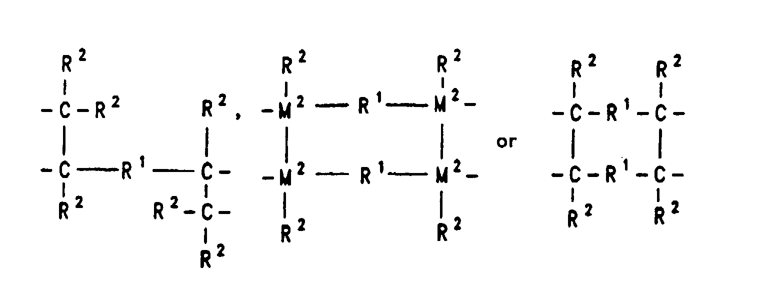 and k is an integer ≥ 2, if B is 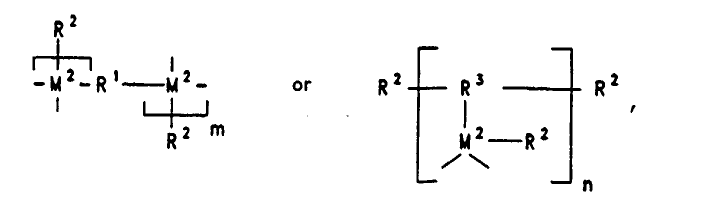
where
R¹ are identical or different and are a divalent hydrocarbon-containing C₁-C₄₀ bridge structure,
the radicals R² are identical or different and are a hydrogen atom, a halogen atom or a hydrocarbon-containing C₁-C₄₀ radical,
R³ is a trivalent hydrocarbon-containing C₁-C₄₀ radical, and n is k and m is k-1 and
M² is silicon, germanium or tin.

3. A polynuclear metallocene compound as claimed in claim 2, wherein M¹ are identical or different and are zirconium or hafnium, the radicals X are identical and are a C₁-C₄-alkyl group, a C₇-C₁₀-alkylaryl group or a halogen atom,
R⁵ to R⁸ are identical or different and are a hydrogen atom, a C₁-C₁₀-alkyl group, a C₆-C₂₀-aryl group or a SiR¹⁵₃ radical, where R¹⁵ is a C₁-C₁₀-alkyl group, or the radicals R⁵ and R⁶ and/or R⁷ and R⁸ together with the atoms connecting them form an aromatic or aliphatic ring system,
R⁹ to R¹⁴ are identical or different and are a hydrogen atom, a C₁-C₁₀-alkyl group or a C₆-C₂₀-aryl group, or
R⁹ and R¹⁰ and/or two or more adjacent radicals R¹¹, R¹², R¹³ and R¹⁴ together with the atoms connecting them form an aromatic or aliphatic ring system,
k is 2,
B is 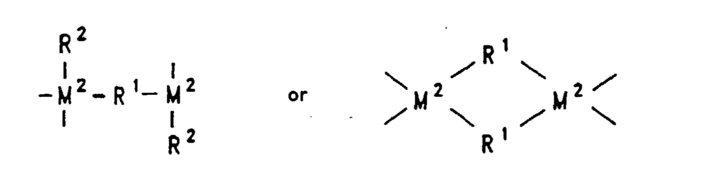
where
M² is silicon,
R¹ are identical or different and are a divalent linear or branched C₁-C₆-alkyl group, in particular 1,2-ethanediyl, 1,3-propanediyl, 1,4-butanediyl or 1,6-hexanediyl and
the radicals R² are identical or different and are hydrogen, a C₁-C₄-alkyl group or a C₆-C₁₀-aryl group.

4. A catalyst system comprising at least one polynuclear metallocene compound as claimed in one or more of claims 1-3 and at least one cocatalyst.

5. A catalyst system comprising at least one polynuclear metallocene compound as claimed in one or more of claims 1-3 and at least one cocatalyst which is supported and/or prepolymerized.

6. A process for preparing a polynuclear metallocene compound as claimed in claim 1, which comprises deprotonating compounds LH and L'H with a base and reacting the deprotonated compounds with a reagent 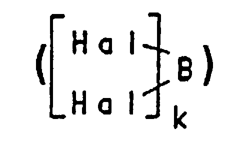 to give a compound of the formula A3 or one of its isomers 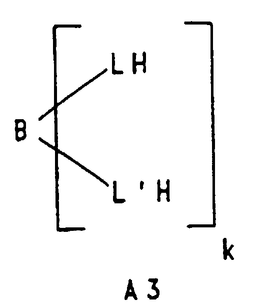 and subsequently deprotonating this with 2 k equivalents of a base and reacting the deprotonated compound with k equivalents of a metal tetrahalide to give the compound A4 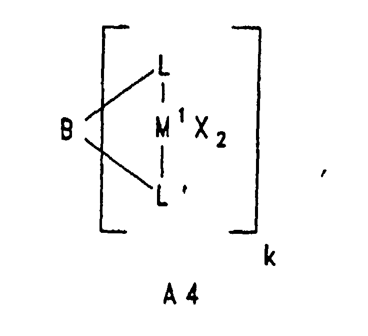 this being able, if desired, to be reacted with a derivatizing reagent to give a compound of the formula I in which X is not halogen.

7. A process for preparing an olefin polymer by polymerization of at least one olefin in the presence of a catalyst which contains at least one polynuclear metallocene and at least one cocatalyst, wherein the polynuclear metallocene is a compound of the formula I 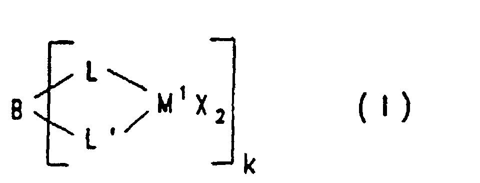 where
M¹ are identical or different and are a metal of group IVb, Vb or VIb of the Periodic Table,
X are identical or different and are hydrogen, a C₁-C₁₀-alkyl group, a C₁-C₁₀-alkoxy group, a C₆-C₁₀-aryl group, a C₆-C₁₀-aryloxy group, a C₂-C₁₀-alkenyl group, a C₇-C₄₀-arylalkyl group, a C₇-C₄₀-alkylaryl group, a C₈-C₄₀-aryl-alkenyl group, an OH group, a halogen atom or pseudohalogen,
L and L' are identical or different and are a Π ligand or O, S, PR⁴ or NR⁴ in which R⁴ is a hydrogen atom or a C₁-C₃₀ hydrocarbon radical such as C₁-C₂₀-alkyl or C₆-C₁₄-aryl,
k is 2 if B is 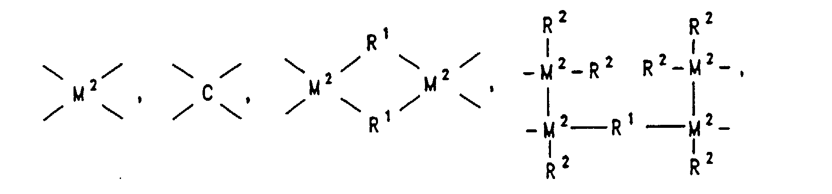 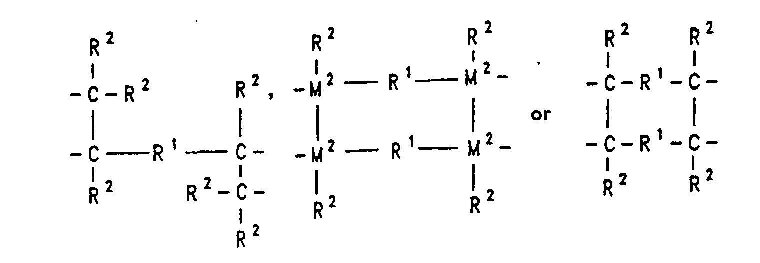 and k is an integer ≥ 2 if B is 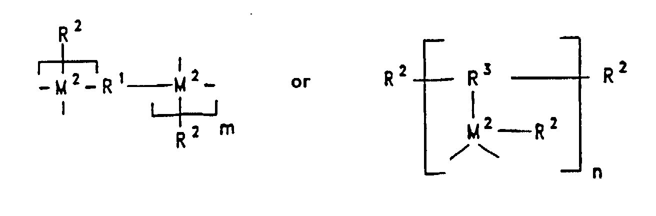 where R¹ are identical or different and are a divalent hydrocarbon-containing bridge structure, the radicals R² are identical or different and are a hydrogen atom, a halogen atom or a hydrocarbon-containing radical,
R³ is a trivalent hydrocarbon-containing radical, and n is k and m is k-1 and
M² is silicon, germanium or tin.

8. A shaped part comprising at least one olefin polymer prepared by the process as claimed in claim 7.

9. Use of a polynuclear metallocene compound as claimed in one or more of claims 1-3 for olefin polymerization.

## Revendications

1. Composé métallocène polynucléaire de la formule I 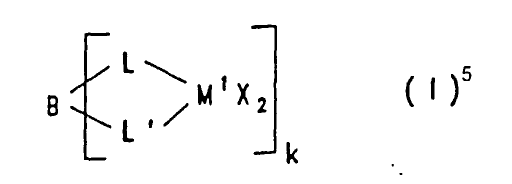 dans laquelle
M¹ sont identiques ou différents et représentent un métal du groupe IV, Vb ou VI du système périodique,
X sont identiques ou différents et représentent l'hydrogène, un radical alkyle en C₁-C₁₀, alcoxy en C₁-C₁₀, aryle en C₆-C₁₀, aryloxy en C₆-C₁₀, alcényle en C₂-C₁₀, arylalkyle en C₇-C₄₀, arylalcényle en C₈-C₄₀, un radical OH, un atome d'halogène ou un pseudohalogène,
L et L' sont identiques ou différents et représentent un π-ligand ou bien O, S, PR⁴ ou NR⁴, où R⁴ représente un atome d'hydrogène ou un radical hydrocarboné en C₁-C₃₀ comme un radical alkyle en C₁-C₂₀ ou aryle en C₆-C₁₄, et
k est égal à 2 lorsque B représente 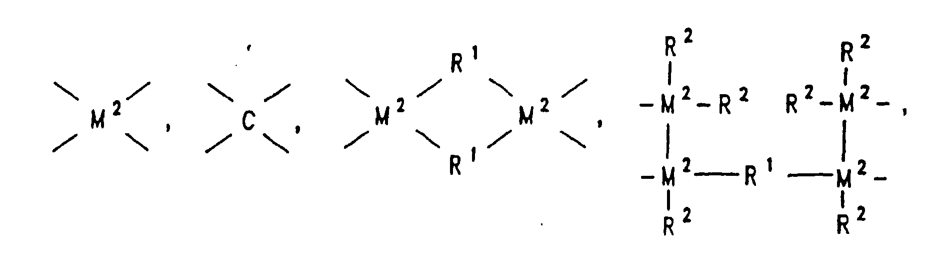 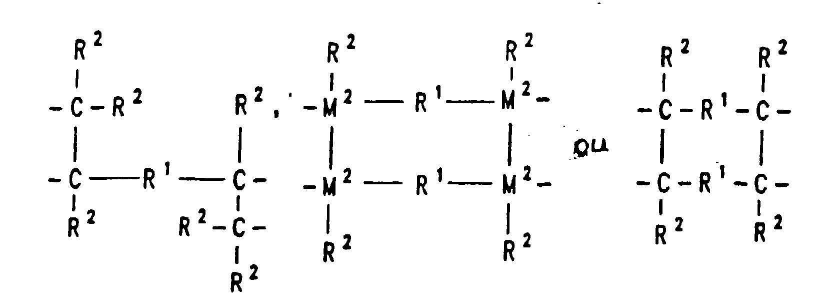
et
k est un nombre entier ≥ 2, lorsque B représente 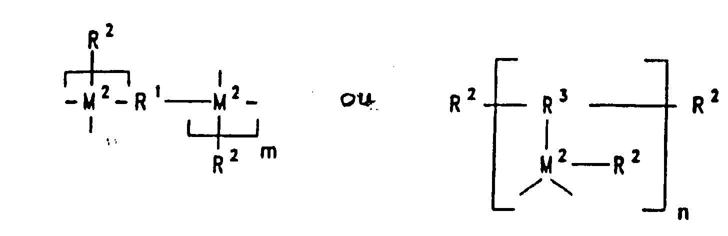 ist,
où R¹ sont identiques ou différents et représentent un pont hydrocarboné à deux liaisons, les radicaux R² sont identiques ou différents et représentent un atome d'hydrogène, un atome d'halogène ou un radical hydrocarboné, R³ représente un radical hydrocarboné à trois liaisons, n est égal à k et m est égal à k-1, et M² représente le silicium, le germanium ou l'étain.

2. Composé métallocène polynucléaire de la formule II 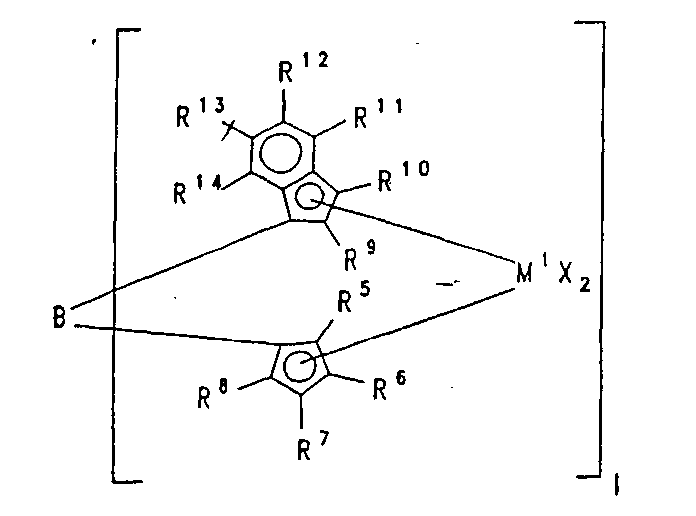 dans laquelle M¹ sont identiques ou différents et représentent un métal du groupe IVb, Vb ou Vlb du système périodique, X sont identiques ou différents et représentent l'hydrogène, un radical alkyle en C₁-C₁₀, alcoxy en C₁-C₁₀, aryle en C₆-C₁₀, aryloxy en C₆-C₁₀, alcényle en C₂-C₁₀, arylalkyle en C₇-C₄₀, alkylaryle en C₇-C₄₀, arylalcényle en C₈-C₄₀, un radical OH, un atome d'halogène ou un pseudohalogène, les radicaux R⁵, R⁶, R⁷ et R⁸ sont identiques ou différents et représentent un atome d'hydrogène, un atome d'halogène, un radical alkyle en C₁-C₁₀, qui peut être halogéné, un radical aryle en C₆-C₂₀, arylalkyle en C₇-C₄₀, alkylaryle en C₇-C₄₀, alcényle en C₂-C₁₀, arylalcényle en C₈-C₄₀, un radical -NR¹⁵₂-, -SR¹⁵, -OSiR¹⁵₃-, -SiR¹⁵₃- ou - PR¹⁵₂-, où R¹⁵ sont identiques ou différents et représentent un radical alkyle en C₁-C₁₀ ou aryle en C₆-C₁₀, ou bien deux ou plusieurs radicaux voisins R⁵, R⁶, R⁷ et R⁸ forment ensemble un noyau avec les atomes qui les relient, R⁹ à R¹⁴ sont identiques ou différents et représentent un atome d'hydrogène, un atome d'halogène, un radical alkyle en C₁-C₁₀, qui peut être halogéné, un radical aryle en C₆-C₂₀, arylalkyle en C₇-C_{40,} alcényle en C₂-C₁₀, arylalcényle en C₈-C₄₀, un radical -NR¹⁵₂-, -SR¹⁵, - -OSiR¹⁵₃-, -SiR¹⁵₃- ou -PR¹⁵₂-, où R¹⁵ sont identiques ou différents et représentent un radical alkyle en C₁-C₁₀ ou aryle en C₆-C₁₀, ou bien deux ou plusieurs radicaux voisins R⁹, R¹⁰, R¹¹, R¹², R¹³ et R¹⁴ forment un noyau avec les atomes qui les relient,
k est égal à 2 lorsque B représente 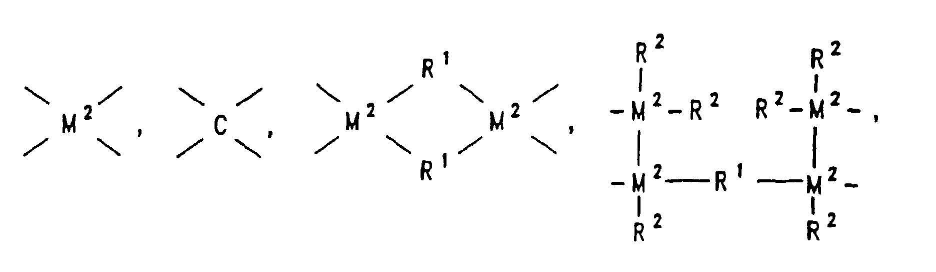 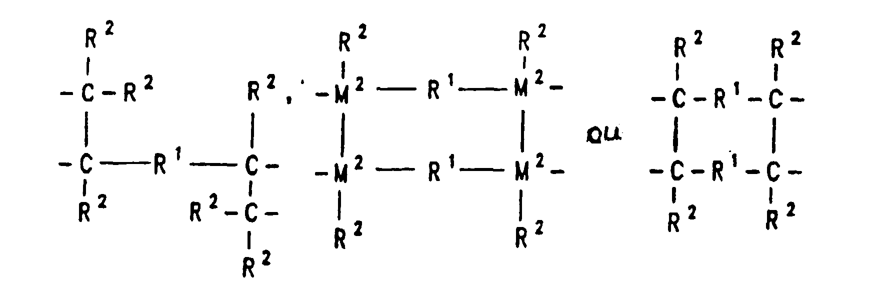
et k est un nombre entier ≥ 2 lorsque B représente 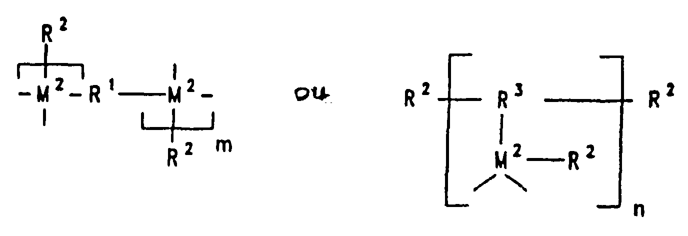 ist,
où R¹ sont identiques ou différents et représentent un pont hydrocarboné à deux liaisons en C₁-C₄₀, les radicaux R² sont identiques ou différents et représentent un atome d'hydrogène, un atome d'halogène ou un radical hydrocarboné en C₁-C₄₀, R³ représente un radical hydrocarboné à trois liaisons en C₁-C₄₀, n est égal à k et m est égal à k-1, et M² représente le silicium, le germanium ou l'étain.

3. Composé de métallocène polynucléaire selon la revendication 2, caractérisé en ce que M¹ sont identiques ou différents et représentent le zirconium ou l'hafnium, les radicaux X sont identiques et représentent un radical alkyle en C₁-C₄, un radical alkylaryle en C₇-C₁₀ ou un atome d'halogène, R⁵ à R⁸ sont identiques ou différents et représentent un atome d'hydrogène, un radical alkyle en C₁-C₁₀, un radical aryle en C₆-C₂₀ ou un radical SiR¹⁵₃, où R¹⁵ représente un radical alkyle en C₁-C₁₀, ou bien les radicaux R⁵ et R⁶ et/ou R⁷ et R⁸ forment ensemble un noyau aromatique ou aliphatique avec les atomes qui les composent, R⁹ à R¹⁴ sont identiques ou différents et représentent un atome d'hydrogène, un radical alkyle en C₁-C₁₀ ou aryle en C₆-C₂₀, ou bien R⁹ et R¹⁰ et/ou deux radicaux voisins R¹¹, R¹², R¹³ et R¹⁴ forment ensemble un noyau aromatique ou aliphatique avec les atomes qui les composent, k est égal à 2, B représente 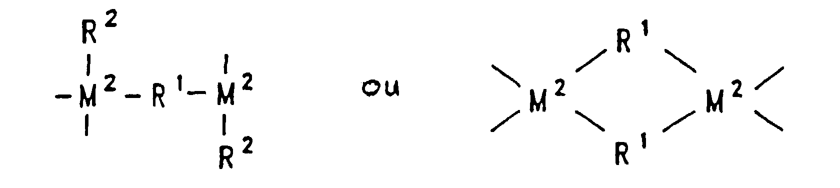 où M² représente le silicium, R¹ sont identiques ou différents de représentent un radical alkyle à deux liaisons en C₁-C₆, linéaire ou ramifié, en particulier un radical 1,2-éthanediyle, 1,3-propanediyle, 1,4-butanediyle ou 1,6-hexanediyle, et les radicaux R² sont identiques ou différents et représentent l'hydrogène, un radical alkyle en C₁-C₄ ou aryle en C₆-C₁₀.

4. Système catalytique contenant au moins un composé métallocène polynucléaire selon une ou plusieurs des revendications 1 à 3 et au moins un cocatalyseur.

5. Système catalytique contenant au moins un composé métallocène polynucléaire selon une ou plusieurs des revendications 1 à 3 et au moins un cocatalyseur, lequel peut être supporté et/ou prépolymérisé.

6. Procédé de préparation d'un composé métallocène polynucléaire selon la revendication 1, caractérisé en ce que les 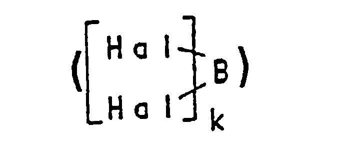 composés LH et L'H sont déprotonés par une base et convertis au moyen d'un réactif en un composé de la formule A3 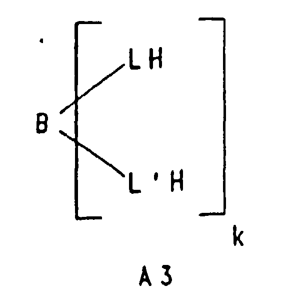 ou l'un de ses isomères, qui est ensuite déprotoné par 2 k équivalents d'une base et convertis par k équivalents d'un tétrahalogénure métallique en un composé A4 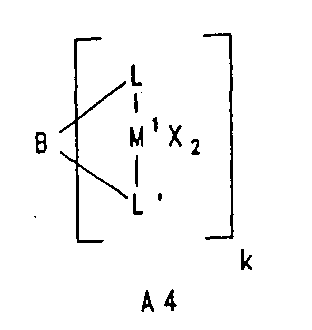 qui peut éventuellement être converti au moyen d'un agent de dérivation en un composé de la formule I avec un halogène différent de X.

7. Procédé de préparation d'un polymère oléfinique par polymérisation d'une oléfine, en présence d'un catalyseur, lequel contient au moins un métallocène polynucléaire et au moins un cocatalyseur, caractérisé en ce que le métallocène polynucléaire est un composé de la formule I 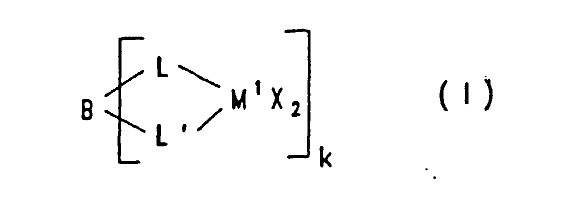 dans laquelle
M¹ sont identiques ou différents et représentent un métal du groupe IV, Vb ou VI du système périodique,
X sont identiques ou différents et représentent l'hydrogène, un radical alkyle en C₁-C₁₀, alcoxy en C₁-C₁₀, aryle en C₆-C₁₀, aryloxy en C₆-C₁₀, alcényle en C₂-C₁₀, arylalkyle en C₇-C₄₀, arylalcényle en C₈-C₄₀, un radical OH, un atome d'halogène ou un pseudohalogène.
L et L' sont identiques ou différents et représentent un π-ligand ou bien O, S, PR⁴ ou NR⁴, où R⁴ représente un atome d'hydrogène ou un radical hydrocarboné en C₁-C₃₀ comme un radical alkyle en C₁-C₂₀ ou aryle en C₆-C₁₄, et
k est égal à 2 lorsque B représente 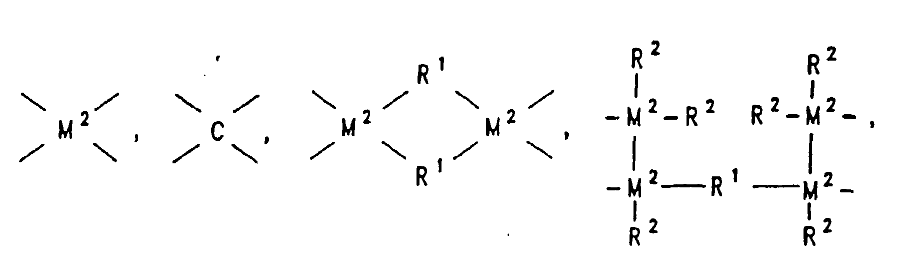 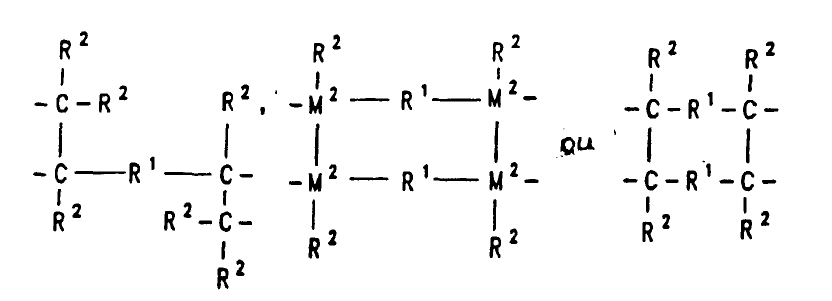
et
k est un nombre entier ≥ 2, lorsque B représente 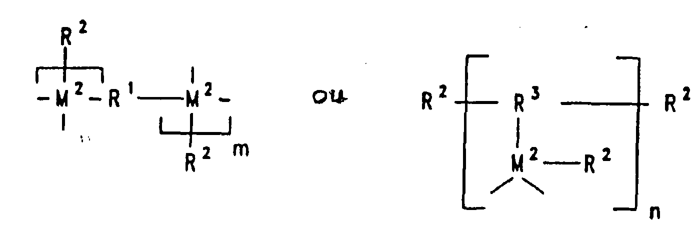
ist,
où R¹ sont identiques ou différents et représentent un pont hydrocarboné à deux liaisons, les radicaux R² sont identiques ou différents et représentent un atome d'hydrogène, un atome d'halogène ou un radical hydrocarboné, R³ représente un radical hydrocarboné à trois liaisons, n est égal à k et m est égal à k-1, et M² représente le silicium, le germanium ou l'étain.

8. Corps façonnés, contenant au moins un polymère oléfinique, préparé par le procédé selon la revendication 7.

9. Utilisation d'un composé métallocène polynucléaire selon une ou plusieurs des revendications 1 à 3, pour la polymérisation d'oléfines.
